# EUROPEAN PATENT APPLICATION

(11) **EP 4 631 724 A1**
(43) Date of publication of application: **15.10.2025**
(21) Application number: 23900649.7
(22) Date of filing: 05.12.2023
(51) Int. Cl.: B32B 27/10, B32B 9/00, B32B 27/28, B65D 65/40

(54) **MULTILAYER STRUCTURE, AND PAPER CONTAINER FOR LIQUID**

(30) Priority: 05.12.2022 JP 2022194292
(71) Applicant: Kuraray Co., Ltd., Kurashiki-shi, Okayama 710-0801 (JP)
(72) Inventor: NAKAZAWA, Shogo, Tokyo 100-0004 (JP); YOSHIDA, Kentaro, Kurashiki-shi, Okayama 713-8550 (JP); KITAMURA, Masahiro, Tokyo 100-0004 (JP); KATAKURA, Tsuyoshi, Tokyo 100-0004 (JP); MURAKAMI, Maya, Tokyo 100-0004 (JP); IZUMI, Yuki, Kurashiki-shi, Okayama 713-8550 (JP)
(74) Representative: Müller-Boré & Partner Patentanwälte PartG mbB
(86) International application number: PCT/JP2023/043442
(87) International publication number: WO 2024/122534

(57) **Abstract**

A multilayer structure and the like are provided. The multilayer structure: enables forming a paper container that has superior gas barrier properties, and also has sufficient strength even in low-temperature environments; and inhibits the occurrence of defects during recycling. The multilayer structure includes: a paper layer (A); a vapor-deposited inorganic layer (B); a barrier resin layer (C); an adhesion resin layer (D); and a moisture-proof resin layer (E). The vapor-deposited inorganic layer (B), the barrier resin layer (C), the adhesion resin layer (D), and the moisture-proof resin layer (E) are all directly laminated in this order. The vapor-deposited inorganic layer (B) has an average thickness of 5 nm or more and 200 nm or less. The barrier resin layer (C) contains, as a principal component, an ethylene-vinyl alcohol copolymer (c) having an ethylene unit content of 20 mol% or more and 50 mol% or less, and a degree of saponification of 90 mol% or more. The adhesion resin layer (D) contains an adhesive resin (d) as a principal component. The moisture-proof resin layer (E) contains a polyethylene (e) as a principal component.

## Description

### [TECHNICAL FIELD]

The present invention relates to a multilayer structure, and a paper container for liquid.

### [BACKGROUND ART]

Paper containers are widely used as containers for containing: beverages such as milk and juice; liquid foods such as soup; alcoholic beverages such as sake and shochu; other various types of liquids aside from foods; and the like. As a material used for the paper containers, a multilayer structure including: a paper layer; and, e.g., a resin layer, a vapor-deposited layer, and a metal foil that are laminated to the paper layer has been widely used in light of, e.g., barrier properties and heat sealability. Patent Document 1 discloses a paper container formed from a multilayer structure in which: a synthetic resin layer or the like is laminated to one face of a substrate mainly composed of a paper layer; and an intermediate layer made from a linear low-density polyethylene resin, a barrier layer, and a sealant layer are laminated in this order to the other face of the substrate. The barrier layer of the multilayer structure employed in Patent Document 1 is a vapor-deposited film obtained by vapor-depositing an inorganic substance on a polyethylene terephthalate resin film.

### [PRIOR ART DOCUMENT]

### [PATENT DOCUMENT]

Patent Document 1: Japanese Unexamined Patent Application, Publication No. 2004-250025

### [SUMMARY OF THE INVENTION]

### [Problems to Be Solved by the Invention]

Superior gas barrier properties are required for the paper containers for containing beverages and the like in light of preservation of the quality. Particularly because the paper container is formed by, e.g., folding and heat-sealing a multilayer structure including a paper layer, the gas barrier properties are likely to deteriorate due to, e.g., generation of a pinhole at the folded portion. In addition, sufficient strength is also required for the paper containers to withstand vibrations, falls, etc., such that leakage does not occur at, e.g., the heat-sealed portions when a beverage or the like contained in the paper container is transported in low-temperature environments.

Furthermore, it is desirable that the packaging material for the paper containers and the like is a material easy to be recovered and recycled (high recyclability). However, with respect to a multilayer structure provided with various resin layers and the like other than a paper layer, in a case in which the resin layers and the like from which the paper layer is removed are used for melt forming, the resulting recycled products (melt-formed products) may have defects due to a difference between melting temperatures of the resins, a crosslinking reaction of the resins, and the like, whereby the appearance and the quality may deteriorate.

The present invention was made in view of the foregoing circumstances, and it is an object of the present invention to provide: a multilayer structure, which enables forming a paper container that has superior gas barrier properties in both a state before folding processing and a state after the folding processing, and also has sufficient strength even in low-temperature environments, and which inhibits occurrence of defects during recycling; and a paper container for liquid including such a multilayer structure.

### [Means for Solving the Problems]

The object of the invention is accomplished by providing any one of the following:
(1) A multilayer structure including: a paper layer (A);
   a vapor-deposited inorganic layer (B);
   a barrier resin layer (C);
   an adhesion resin layer (D); and
   a moisture-proof resin layer (E), wherein
   the vapor-deposited inorganic layer (B), the barrier resin layer (C), the adhesion resin layer (D), and the moisture-proof resin layer (E) are all directly laminated in this order,
   the vapor-deposited inorganic layer (B) has an average thickness of 5 nm or more and 200 nm or less,
   the barrier resin layer (C) contains, as a principal component, an ethylene-vinyl alcohol copolymer (c) having an ethylene unit content of 20 mol% or more and 50 mol% or less, and a degree of saponification of 90 mol% or more,
   the adhesion resin layer (D) contains an adhesive resin (d) as a principal component,
   the moisture-proof resin layer (E) contains a polyethylene (e) as a principal component, and
   the multilayer structure does not include: a layer containing, as a principal component, a resin having a melting point of 200 °C or higher; and a metal layer having an average thickness of 1 µm or more;
(2) The multilayer structure according to (1), further including a thermoplastic-resin layer (X) interposed between the paper layer (A) and the vapor-deposited inorganic layer (B) or the moisture-proof resin layer (E);
(3) The multilayer structure according to (1) or (2), including the paper layer (A), the vapor-deposited inorganic layer (B), the barrier resin layer (C), the adhesion resin layer (D), and the moisture-proof resin layer (E) in this order;
(4) The multilayer structure according to any one of (1) to (3), wherein the adhesive resin (d) is an acid-modified polyethylene;
(5) The multilayer structure according to any one of (1) to (4), wherein the vapor-deposited inorganic layer (B) is: a vapor-deposited metal layer containing aluminum as a principal component; or a vapor-deposited inorganic-oxide layer containing alumina or silica as a principal component;
(6) The multilayer structure according to any one of (1) to (5), wherein the barrier resin layer (C) contains at least one type of multivalent metal ion selected from the group consisting of a magnesium ion, a calcium ion, and a zinc ion, in an amount of 10 ppm or more and 200 ppm or less;
(7) The multilayer structure according to any one of (1) to (6), wherein the ethylene-vinyl alcohol copolymer (c) contains two or more types of ethylene-vinyl alcohol copolymers having different ethylene unit contents;
(8) The multilayer structure according to any one of (1) to (7), wherein
   the polyethylene (e) has a density of 0.880 g/cm³ or more and 0.940 g/cm³ or less, and
   the polyethylene (e) is a linear low-density polyethylene, a low-density polyethylene, or a mixture thereof;
(9) The multilayer structure according to any one of (1) to (8), wherein
   a laminate of the barrier resin layer (C), the adhesion resin layer (D), and the moisture-proof resin layer (E) is a co-extruded film,
   the co-extruded film has an average thickness of 8 µm or more and 120 µm or less, and
   the vapor-deposited inorganic layer (B) is provided on a face of the co-extruded film on a barrier resin layer (C) side;
(10) The multilayer structure according to (9), wherein
   the barrier resin layer (C) has an average thickness of 0.2 µm or more and less than 30 µm, and
   a proportion accounted for by the average thickness of the barrier resin layer (C) in the average thickness of the co-extruded film is less than 25%;
(11) The multilayer structure according to (9) or (10), wherein the co-extruded film is substantially not stretched;
(12) The multilayer structure according to (9) or (10), wherein the co-extruded film is at least uniaxially stretched by three times or more and less than twelve times;
(13) The multilayer structure according to (9) or (10), wherein the co-extruded film is biaxially stretched each by three times or more and less than twelve times;
(14) The multilayer structure according to any one of (9) to (13), further including a moisture-proof resin layer (F) containing a polyethylene (f) as a principal component;
(15) The multilayer structure according to (14), wherein
   the polyethylene (f) has a density of 0.880 g/cm³ or more and 0.940 g/cm³ or less, and
   the polyethylene (f) is a linear low-density polyethylene, a low-density polyethylene, or a mixture thereof;
(16) The multilayer structure according to (14) or (15), wherein the moisture-proof resin layer (F) is directly laminated to the co-extruded film;
(17) The multilayer structure according to any one of (1) to (16), not including an adhesive-agent layer made from a curable adhesive agent;
(18) The multilayer structure according to any one of (1) to (17), wherein the paper layer (A) has a basis weight of 200 g/m² or more and less than 400 g/m²;
(19) The multilayer structure according to any one of (1) to (18), wherein a mass ratio of the paper layer (A) to the entire multilayer structure is 0.60 or more;
(20) The multilayer structure according to any one of (1) to (19), wherein in a portion of the multilayer structure other than the paper layer (A), a ratio of a total of average thicknesses of layers each containing a polyethylene resin as a principal component is 0.75 or more;
(21) The multilayer structure according to any one of (1) to (20), wherein in a portion of the multilayer structure other than the paper layer (A), a ratio of a total of average thicknesses of layers each containing, as a principal component, a resin containing an ethylene unit is 0.95 or more;
(22) The multilayer structure according to any one of (1) to (21), including the paper layer (A) as a surface of the multilayer structure;
(23) The multilayer structure according to any one of (1) to (22), having an oxygen transmission rate of less than 0.5 cc/(m²·day·atm) under a condition involving 20 °C and 65% RH, measured in accordance with a method disclosed in JIS K 7126-2:2006;
(24) The multilayer structure according to any one of (1) to (23), wherein after the multilayer structure is subjected to folding processing that includes: folding the multilayer structure in four such that the paper layer (A) is closer to an outside of the multilayer structure than the moisture-proof resin layer (E) is; and leaving the multilayer structure to stand in this state for one minute while applying a load of 5 kg to a top of the multilayer structure, the multilayer structure has an oxygen transmission rate of less than 1.0 cc/(m²·day·atm) under a condition involving 20 °C and 65% RH, measured in accordance with a method disclosed in JIS K 7126-2:2006; and
(25) A paper container for liquid, the paper container being formed from the multilayer structure according to any one of (1) to (24).

### [Effects of the Invention]

The present invention can provide: a multilayer structure, which enables forming a paper container that has superior gas barrier properties in both a state before folding processing and a state after the folding processing, and also has sufficient strength even in low-temperature environments, and which inhibits the occurrence of defects during recycling; and a paper container for liquid including such a multilayer structure.

### [DESCRIPTION OF EMBODIMENTS]

### Multilayer Structure

A multilayer structure of the present invention includes: a paper layer (A); a vapor-deposited inorganic layer (B); a barrier resin layer (C); an adhesion resin layer (D); and a moisture-proof resin layer (E). The vapor-deposited inorganic layer (B), the barrier resin layer (C), the adhesion resin layer (D), and the moisture-proof resin layer (E) are all directly laminated in this order. The vapor-deposited inorganic layer (B) has an average thickness of 5 nm or more and 200 nm or less. The barrier resin layer (C) contains, as a principal component, an ethylene-vinyl alcohol copolymer (c) having an ethylene unit content of 20 mol% or more and 50 mol% or less, and a degree of saponification of 90 mol% or more. The adhesion resin layer (D) contains an adhesive resin (d) as a principal component. The moisture-proof resin layer (E) contains a polyethylene (e) as a principal component. The multilayer structure does not include: a layer containing, as a principal component, a resin having a melting point of 200 °C or higher; and a metal layer having an average thickness of 1 µm or more. Note that hereinafter, the ethylene-vinyl alcohol copolymer may be referred to as "EVOH".

The multilayer structure of the present invention: enables forming a paper container that has superior gas barrier properties in both a state before folding processing and a state after the folding processing, and also has sufficient strength even in low-temperature environments; and inhibits the occurrence of defects during recycling. Although the reason is not clear, the following reason can be inferred. Due to, e.g., the multilayer structure having a structure in which the vapor-deposited inorganic layer (B) having a thickness falling within the predetermined range and the barrier resin layer (C) containing, as a principal component, the EVOH superior in gas barrier properties are directly laminated to each other, the gas barrier properties can be superior in both a state before folding processing and a state after the folding processing. In addition, in the multilayer structure, the moisture-proof resin layer (E) contains the polyethylene (e) as a principal component. Thus, it is possible to form a paper container having sufficient strength even in low-temperature environments by, e.g., heat-sealing the moisture-proof resin layer (E) to form the paper container. Furthermore, due to: the thickness of the vapor-deposited inorganic layer (B) falling within the range of relatively small thicknesses; the barrier resin layer (C) and the moisture-proof resin layer (E) each containing a predetermined resin as a principal component; the multilayer structure not including a layer containing, as a principal component, a resin having a melting point of 200 °C or higher, and a metal layer having an average thickness of 1 µm or more; and the like, the multilayer structure inhibits the occurrence of defects during recycling.

Note that the "principal component" as referred to herein means a component having the largest content on mass basis.

As referred to herein, the "average thickness" of each layer, etc. means the average value of thicknesses measured at any five places.

"ppm" as referred to herein means the content on mass basis (mass ppm).

The "polyethylene" as referred to herein means: a homopolymer of ethylene; a copolymer of 80 mol% or more ethylene and a 20 mol% or less α-olefin monomer; and a copolymer of 90 mol% or more ethylene and a less than 10 mol% non-olefinic monomer containing no atom other than a carbon atom, an oxygen atom, and a hydrogen atom in its functional groups.

The "acid-modified polyethylene" as referred to herein means a polymer obtained by modifying the polyethylene with an acid. The acid-modified polyethylene may be a polymer obtained by introducing at least one of an acidic group or an acidic anhydride group into the polyethylene.

The "polyethylene resin" as referred to herein means the polyethylene and the modified polyethylene (such as the acid-modified polyethylene). The modified polyethylene as referred to herein means a polymer obtained by modifying the polyethylene.

Furthermore, as referred to herein, the "surface" of the multilayer structure means an exposed face, not in the sense of distinguishing between the front and the back. In other words, the multilayer structure has two surfaces. Similarly, the multilayer structure has two outermost layers.

Each layer, the layer configuration, and the like of the multilayer structure according to an embodiment of the present invention will be described in detail below.

### Paper Layer (A)

The paper layer (A) is typically a layer to be included as a substrate in the multilayer structure of the present invention. As the paper layer (A), general paper containing, as a principal component, pulp derived from a plant can be used. In addition to the pulp, the paper layer (A) may contain a sizing agent, a filler, a paper strengthening agent, a retention aid, a pH-adjusting agent, a drainage aid, a water proofing agent, a softener, an antistatic agent, a defoamer, a slime-controlling agent, a dye, a pigment, etc.

Paper that constitutes the paper layer (A) is exemplified by kraft paper, woodfree paper, medium-quality paper, alkaline paper, a paperboard, glassine paper, semi-glassine paper, parchment paper, and the like. The paper is preferably kraft paper or a paperboard, and more preferably a paperboard.

The basis weight (mass per unit area) of the paper layer (A) is not particularly limited, and may be, e.g., 50 g/m² or more and less than 500 g/m², preferably 100 g/m² or more and less than 450 g/m², more preferably 200 g/m² or more and less than 400 g/m², still more preferably 220 g/m² or more and less than 350 g/m², and yet more preferably 240 g/m² or more and less than 300 g/m². When the basis weight of the paper layer (A) is equal to or more than the lower limit, it is possible to, e.g., more enhance the strength of the resulting paper container in low-temperature environments. On the other hand, when the basis weight of the paper layer (A) is less than the upper limit, it is possible to, e.g., improve the formability.

The paper layer (A) has a density of, e.g., preferably 0.5 g/cm³ or more and 1.5 g/cm³ or less, and more preferably 0.7 g/cm³ or more and 1.3 g/cm³ or less.

The paper used for the paper layer (A) can be produced by a well-known process. Alternatively, commercially available paper can be used for the paper layer (A).

### Vapor-Deposited Inorganic Layer (B)

In the multilayer structure of the present invention, the vapor-deposited inorganic layer (B) mainly ensures the gas barrier properties.

The vapor-deposited inorganic layer (B) can be formed by vapor-depositing an inorganic substance. Typically, the vapor-deposited inorganic layer (B) is formed by vapor depositon of an inorganic substance on a surface of the barrier resin layer (C). The inorganic substance is exemplified by: metals (for example, aluminum, copper, and the like); oxides (for example, alumina, silica, and the like); nitrides (for example, silicon nitrides and the like); oxynitrides (for example, silicon oxynitrides and the like); carbonitrides (for example, silicon carbonitrides and the like); and the like.

The vapor-deposited inorganic layer (B) is preferably a vapor-deposited metal layer or a vapor-deposited inorganic-oxide layer. In a case in which barrier properties after folding processing and light shielding properties are prioritized, the vapor-deposited inorganic layer (B) is more preferably a vapor-deposited metal layer, which is preferably a vapor-deposited metal layer containing aluminum as a principal component, and may be a vapor-deposited aluminum layer. On the other hand, in a case in which coloring prevention during recycling is prioritized, the vapor-deposited inorganic layer (B) is preferably a vapor-deposited inorganic-oxide layer, which is preferably a vapor-deposited inorganic-oxide layer containing alumina (aluminum oxide) or silica (silicon oxide) as a principal component.

Note that in the vapor-deposited metal layer (vapor-deposited inorganic layer (B)) containing aluminum as a principal component, oxidation may irreversibly occur, and thus aluminum oxide may be included in part. The vapor-deposited metal layer (vapor-deposited inorganic layer (B)) containing aluminum as a principal component has a molar ratio (Oₘₒₗ/Alₘₒₗ) of the content of oxygen atoms to the content of aluminum atoms of preferably 0.5 or less, more preferably 0.3 or less, and still more preferably 0.1 or less.

The lower limit of the average thickness of the vapor-deposited inorganic layer (B) is 5 nm, preferably 10 nm, more preferably 20 nm, and still more preferably 30 nm. When the average thickness of the vapor-deposited inorganic layer (B) is equal to or more than the lower limit, it is possible to, e.g., more improve the gas barrier properties. The upper limit of the average thickness of the vapor-deposited inorganic layer (B) is 200 nm, preferably 150 nm, more preferably 120 nm, and still more preferably 80 nm. When the average thickness of the vapor-deposited inorganic layer (B) is equal to or less than the upper limit, it is possible to, e.g., inhibit the occurrence of defects, coloring, and the like during recycling. The recycled products (melt-formed products) with inhibited defects, coloring, and the like are preferred due to their favorable appearance, and the like.

The vapor-deposited inorganic layer (B) can be provided by a well-known physical vapor deposition process or chemical vapor deposition process. More specifically, the processes are exemplified by a vacuum vapor deposition process, a sputtering process, an ion plating process, an ion beam mixing process, a plasma chemical vapor deposition (CVD) process, a laser CVD process, a metalorganic (MO)-CVD process, a thermal CVD process, and the like; the physical vapor deposition process is preferred, and the vacuum vapor deposition process is more preferred.

Prior to conducting the vapor deposition, the surface of the layer (for example, the barrier resin layer (C)) to be subjected to the vapor deposition may be subjected to a plasma treatment. As the plasma treatment, well-known processes can be used, and an atmospheric-pressure plasma treatment is preferred. Examples of discharge gas in the atmospheric-pressure plasma treatment include a nitrogen gas, helium, neon, argon, krypton, xenon, radon, and the like. Of these, nitrogen, helium, and argon are preferred, and nitrogen is more preferred in light of cost reduction.

The vapor-deposited inorganic layer (B) may consist of a single layer or a plurality of layers.

### Barrier Resin Layer (C)

The barrier resin layer (C) contains, as a principal component, the EVOH (c) having an ethylene unit content of 20 mol% or more and 50 mol% or less, and a degree of saponification of 90 mol% or more. Because the multilayer structure of the present invention includes such a barrier resin layer (C), superior gas barrier properties can be exhibited both in a state before folding processing and a state after the folding processing.

The EVOH (c) is a copolymer that contains an ethylene unit and a vinyl alcohol unit. The EVOH (c) is typically obtained by saponification of an ethylene-vinyl ester copolymer. The EVOH (c) may contain a residual vinyl ester unit. The production and saponification of the ethylene-vinyl ester copolymer can be carried out by a well-known procedure. Examples of the vinyl ester include vinyl acetate, vinyl formate, vinyl propionate, vinyl valerate, vinyl caprate, vinyl laurate, vinyl stearate, vinyl pivalate, vinyl versatate, other aliphatic carboxylic acid vinyl esters, and the like; vinyl acetate is preferred.

The lower limit of the ethylene unit content of the EVOH (c) is 20 mol%, and preferably 24 mol%, and may be more preferably 28 mol% or 30 mol%. When the ethylene unit content of the EVOH (c) is equal to or more than the lower limit, it is possible to, e.g., enhance the strength in low-temperature environments, and inhibit the occurrence of defects and coloring during recycling. The upper limit of the ethylene unit content of the EVOH (c) is 50 mol%, and preferably 46 mol%, and may be more preferably 42 mol% or 38 mol%. When the ethylene unit content of the EVOH (c) is equal to or less than the upper limit, it is possible to, e.g., improve the gas barrier properties in a state after the folding processing.

The lower limit of the degree of saponification of the EVOH (c) is 90 mol%, preferably 95 mol%, more preferably 99 mol%, and still more preferably 99.9 mol%. When the degree of saponification of the EVOH (c) is equal to or more than the lower limit, the gas barrier properties and the like tend to more improve. The upper limit of the degree of saponification of the EVOH (c) may be 100 mol%.

The EVOH (c) may contain, within a range not leading to impairment of the object of the present invention, other structural unit(s) aside from the ethylene unit, the vinyl alcohol unit, and the vinyl ester unit. In particular, introduction of a modifying group containing a primary hydroxy group having a specific structure may achieve both the gas barrier properties and the formability of the EVOH (c) at high levels. The content of the other monomer unit(s) is preferably 5% by mass or less, more preferably 3% by mass or less, still more preferably 1% by mass or less, and particularly preferably is not substantially contained. Such other monomer(s) is/are exemplified by: α-olefins such as propylene, n-butene, isobutylene, and 1-hexene; acrylic acid and salts thereof; unsaturated monomers having an acrylic acid ester group; methacrylic acid and salts thereof; unsaturated monomers having a methacrylic acid ester group; acrylamide, N-methylacrylamide, N-ethylacrylamide, N,N-dimethylacrylamide, diacetone acrylamide, acrylamide propanesulfonic acid and salts thereof, and acrylamide propyldimethylamine and salts thereof (e.g., quaternary salts); methacrylamide, N-methyl methacrylamide, N-ethyl methacrylamide, methacrylamide propanesulfonic acid and salts thereof, and methacrylamidepropyldimethylamine and salts thereof (e.g., quaternary salts); vinyl ethers such as methyl vinyl ether, ethyl vinyl ether, n-propyl vinyl ether, i-propyl vinyl ether, n-butyl vinyl ether, i-butyl vinyl ether, t-butyl vinyl ether, dodecyl vinyl ether, stearyl vinyl ether, and 2,3-diacetoxy-1-vinyloxypropane; vinyl cyanides such as acrylonitrile and methacrylonitrile; vinyl halides such as vinyl chloride and vinyl fluoride; vinylidene halides such as vinylidene chloride and vinylidene fluoride; allyl compounds such as allyl acetate, 2,3-diacetoxy-1-allyloxypropane, and allyl chloride; unsaturated dicarboxylic acids such as maleic acid, itaconic acid, and fumaric acid, and their salts or esters; vinylsilane compounds such as vinyltrimethoxysilane; and isopropenyl acetate, 1,3-diacetoxy-2-methylenepropane, 1,3-dipropionyloxy-2-methylenepropane, 1,3-dibutylonyloxy-2-methylenepropane, and the like.

The EVOH (c) has an MFR (melt flow rate) (190 °C, load of 2.16 kg) of preferably 0.5 g/10 min or more and 12 g/10 min or less, more preferably 0.8 g/10 min or more and 8.0 g/min or less, and still more preferably 1.2 g/10 min or more and 4.0 g/min or less.

The EVOH (c) may be used alone of one type, or in a combination of two or more types.

The EVOH (c) may contain two or more types of EVOHs having different ethylene unit contents. In such cases, it is possible to, e.g., improve the gas barrier properties in a state after the folding processing and the strength in low-temperature environments in a more balanced manner. The two types of EVOHs having different ethylene unit contents may be two types of EVOHs having different melting points. For example, in a case in which the melting points of the two types of EVOHs are measured by DSC (differential scanning calorimetry), peak temperatures corresponding to the EVOHs can be confirmed, respectively. Note that in the measurement of the melting point by DSC, temperature rise from 30 °C to 250 °C is performed at a rate of 10 °C/min, cooling is performed at 50 °C/min, and then the melting point is determined from the peak temperature measured during a secondary temperature rise.

Of the two types of EVOHs (c), EVOH (c1) having a lower ethylene unit content has an ethylene unit content of preferably 20 mol% or more and 40 mol% or less, and more preferably 24 mol% or more and 32 mol% or less. Of the two types of EVOHs (c), EVOH (c2) having a higher ethylene unit content has an ethylene unit content of preferably 32 mol% or more and 50 mol% or less, and more preferably 38 mol% or more and 48 mol% or less.

The difference (c2 - c1) in the ethylene unit contents between the EVOH (c2) and the EVOH (c1), i.e., a value obtained by subtracting the ethylene unit content of the EVOH (c1) from the ethylene unit content of the EVOH (c2), is preferably 4 mol% or more and 40 mol% or less, more preferably 8 mol% or more and 30 mol% or less, still more preferably 12 mol% or more and 25 mol% or less, and yet more preferably 15 mol% or more and 20 mol% or less.

A mass ratio (c1/c2) of the EVOH (c1) to the EVOH (c2), i.e., the mass ratio of the content of the EVOH (c1) to the content of the EVOH (c2), is preferably 50/50 or more and 95/5 or less, more preferably 60/40 or more and 90/10 or less, and still more preferably 70/30 or more and 85/15 or less.

In light of, e.g., the gas barrier properties, the lower limit of the content of the EVOH (c) in the barrier resin layer (C) is preferably 70% by mass, more preferably 80% by mass, and still more preferably 90% by mass, and may be 95% by mass, 99% by mass, or 99.9% by mass. The upper limit of the content of the EVOH (c) in the barrier resin layer (C) may be 100% by mass or 99.99% by mass.

The barrier resin layer (C) preferably contains at least one type of multivalent metal ion selected from the group consisting of a magnesium ion, a calcium ion, and a zinc ion. The lower limit of the content of the multivalent metal ion in the barrier resin layer (C) is preferably 10 ppm, more preferably 30 ppm, still more preferably 50 ppm, and, in a case in which the inhibition of defects of the recycled resin is particularly prioritized, may be yet more preferably 80 ppm. When the barrier resin layer (C) contains the multivalent metal ion at the content being equal to or more than the lower limit, the occurrence of defects during recycling is more inhibited. On the other hand, the upper limit of the content of the multivalent metal ion in the barrier resin layer (C) may be, e.g., 300 ppm, and is preferably 200 ppm, more preferably 150 ppm, still more preferably 120 ppm, and, in a case in which the inhibition of coloring of the recycled resin is particularly prioritized, may be yet more preferably 80 ppm. When the content of the multivalent metal ion in the barrier resin layer (C) is equal to or less than the upper limit, the occurrence of coloring during recycling may be inhibited.

The multivalent metal ion preferably includes a magnesium ion, and more preferably is a magnesium ion. In such cases, the occurrence of defects during recycling is more inhibited.

It is preferred that in the barrier resin layer (C), the multivalent metal ion is present as a cation constituting a salt, and it is more preferred that in the barrier resin layer (C), the multivalent metal ion is present as a cation constituting a carboxylic acid salt. In the salt such as the carboxylic acid salt, the multivalent metal ion may bond to an anion or may be separated from the anion.

It is preferred that the carboxylic acid salt containing the multivalent metal ion is a salt of a higher fatty acid. More specifically, it is preferred that the carboxylic acid salt containing the multivalent metal ion is a salt of a carboxylic acid having 12 or more carbon atoms. In the case in which the multivalent metal ion is present in the form of such a salt of a higher fatty acid, the occurrence of coloring during recycling is more inhibited. Examples of the carboxylic acid having 12 or more carbon atoms include lauryl acid, lauric acid, tridecylic acid, myristic acid, pentadecylic acid, palmitic acid, heptadecylic acid, stearic acid, basic stearic acid, hydroxystearic acid, basic hydroxystearic acid, nonadecanoic acid, oleic acid, behenic acid, montanic acid, linoleic acid, and the like. The number of carbon atoms of the carboxylic acid may be 12 or more and 30 or less, may be 14 or more and 26 or less, or may be 16 or more and 22 or less.

In the barrier resin layer (C), the multivalent metal ion may be present as a cation constituting, e.g., a fatty acid salt containing 11 or less carbon atoms (such as an acetic acid salt and a propionic acid salt), a salt other than the fatty acid salt (such as a nitric acid salt and a sulfuric acid salt), and the like. A part or all of the multivalent metal ions may be present, for example, in a state where the multivalent metal ion is coordinated to, e.g., a hydroxy group of the EVOH (c).

The barrier resin layer (C) may contain, as an optional component other than the EVOH (c) and the multivalent metal ion or a salt containing the multivalent metal ion: a boron compound; one of carboxylic acids; a phosphorous compound; a metal ion other than the multivalent metal ion; an antioxidant; an ultraviolet ray-absorbing agent; a plasticizer; an antistatic agent; a lubricant; a colorant; a filler; a thermal stabilizer; an other resin aside from the EVOH (c); and the like. The barrier resin layer (C) may contain two or more types of these optional components.

Examples of the boron compound include: boric acids such as orthoboric acid, metaboric acid, and tetraboric acid; boric acid esters such as triethyl borate and trimethyl borate; boric acid salts such as alkali metal salts and alkaline earth metal salts of the above boric acids, and borax; boron hydrides; and the like. The content of the boron compound in the barrier resin layer (C) is preferably 10 ppm or more and 1,000 ppm or less, and more preferably 50 ppm or more and 400 ppm or less. When the content of the boron compound falls within the above range, the melt formability, appearance, and the like may improve. The content of the boron compound is the content in terms of boron element equivalent.

Examples of the carboxylic acids include: formic acid, acetic acid, propionic acid, butyric acid, and lactic acid, and salts thereof; and the like. As the carboxylic acids, carboxylic acids having four or less carbon atoms, or saturated carboxylic acids are preferred, and acetic acids are more preferred. Alternatively, as the carboxylic acids, the above carboxylic acid salt containing the multivalent metal ion may be contained.

The phosphorous compound is exemplified by phosphoric acid, phosphorous acid, and the like, as well as phosphoric acid salts and the like. The phosphoric acid salt may be included in any form such as a primary phosphoric acid salt, a secondary phosphoric acid salt, or a tertiary phosphoric acid salt. Furthermore, cation species of the phosphoric acid salts are not particularly limited, and alkali metal salts and alkaline earth metal salts are preferred. Of these, sodium dihydrogen phosphate, potassium dihydrogen phosphate, disodium hydrogen phosphate, or dipotassium hydrogen phosphate is more preferred. The content of the phosphorous compound in the barrier resin layer (C) is preferably 1 ppm or more and 200 ppm or less, and more preferably 10 ppm or more and 100 ppm or less. When the content of the phosphorous compound falls within the range, the thermal stability may improve, and the occurrence of defects and coloring during recycling may be inhibited. The content of the phosphorous compound is the content in terms of phosphate radical equivalent.

The metal ion other than the multivalent metal ion is exemplified by monovalent metal ions, multivalent metal ions other than the above multivalent metal ions; and the like, and the monovalent metal ions are preferred. The monovalent metal ions are preferably alkali metal ions.

Examples of the alkali metal ion include a lithium ion, a sodium ion, a potassium ion, and the like; a sodium ion or a potassium ion is preferred in light of industrial availability. The alkali metal salt containing the alkali metal ion is exemplified by aliphatic carboxylic acid salts, aromatic carboxylic acid salts, carbonic acid salts, hydrochloric acid salts, nitric acid salts, sulfuric acid salts, phosphoric acid salts, and metal complexes. Of these, in light of availability, the aliphatic carboxylic acid salts or the phosphoric acid salts are preferred, and more specifically, sodium acetate, potassium acetate, sodium phosphate, or potassium phosphate is preferred. The content of the alkali metal ion in the barrier resin layer (C) is preferably 10 ppm or more and 1,000 ppm or less, and more preferably 100 ppm or more and 400 ppm or less. When the content of the alkali metal ions falls within the range, interlayer adhesiveness, and the like may improve, and the occurrence of coloring during recycling may be inhibited.

The antioxidant is exemplified by 2,5-di-t-butylhydroquinone, 2,6-di-t-butyl-p-cresol, 4,4'-thiobis(6-t-butylphenol), 2,2'-methylene-bis(4-methyl-6-t-butylphenol), octadecyl-3-(3',5'-di-t-butyl-4'-hydroxyphenyl)propionate, and the like.

The ultraviolet ray-absorbing agent is exemplified by ethylene-2-cyano-3,3'-diphenyl acrylate, 2-(2'-hydroxy-5'-methylphenyl)benzotriazole, 2-(2'-hydroxy-3'-t-butyl-5'-methylphenyl)-5-chlorobenzotriazole, 2-hydroxy-4-methoxybenzophenone, 2,2'-dihydroxy-4-methoxybenzophenone, 2-hydroxy-4-octyloxybenzophenone, and the like.

The plasticizer is exemplified by dimethyl phthalate, diethyl phthalate, dioctyl phthalate, waxes, liquid paraffin, phosphoric acid esters, and the like.

The antistatic agent is exemplified by pentaerythritol monostearate, sorbitan monopalmitate, sulfated polyolefins, polyethylene oxides, polyethylene glycol (product name: Carbowax), and the like.

The lubricant is exemplified by ethylenebis(stearamide), butyl stearate, and the like.

The colorant is exemplified by carbon black, phthalocyanine, quinacridone, indoline, azo pigments, bengala, and the like.

The filler is exemplified by glass fibers, wollastonite, calcium silicate, talc, montmorillonite, and the like.

The thermal stabilizer is exemplified by hindered phenol compounds, hindered amine compounds, and the like.

The other resin aside from the EVOH (c) is exemplified by polyamides, polyolefins, and the like.

The barrier resin layer (C) may be an unstretched layer or may be a stretched layer. In the case in which the barrier resin layer (C) is a stretched layer, favorable gas barrier properties can be exhibited even in a case in which the barrier resin layer (C) is relatively thin.

The lower limit of the average thickness of the barrier resin layer (C) is preferably 0.1 µm, more preferably 0.2 µm, still more preferably 0.4 µm, and yet more preferably 0.5 µm, 0.6 µm, 0.8 µm, or 1 µm, and may be 2 µm. When the average thickness of the barrier resin layer (C) is equal to or more than the lower limit, it is possible to, e.g., more improve the gas barrier properties. The upper limit of the average thickness of the barrier resin layer (C) is preferably 30 µm, more preferably 20 µm, still more preferably 15 µm, and yet more preferably 10 µm or 5 µm, and may be 3 µm. When the average thickness of the barrier resin layer (C) is equal to or less than the upper limit, it is possible to, e.g., inhibit the occurrence of coloring during recycling.

The barrier resin layer (C) may consist of a single layer or a plurality of layers.

### Adhesion Resin Layer (D)

The adhesion resin layer (D) contains the adhesive resin (d) as a principal component. The adhesion resin layer (D) adheres the barrier resin layer (C) to the moisture-proof resin layer (E).

The adhesive resin (d) is not particularly limited as long as the adhesive resin (d) is a resin having adhesiveness. The adhesive resin (d) is exemplified by: an acid-modified polyolefin (such as a carboxylic acid-modified polyolefin and a sulfonic acid-modified polyolefin); an epoxy-modified polyolefin; and the like. The adhesive resin (d) is preferably a thermoplastic resin. The adhesive resin (d) is preferably an acid-modified polyolefin (such as an acid-modified polyethylene and an acid-modified polypropylene), and more preferably an acid-modified polyethylene. Alternatively, the adhesive resin (d) is also preferably a carboxylic acid-modified polyolefin, and more preferably a carboxylic acid-modified polyethylene.

The carboxylic acid-modified polyolefin may be a polyolefin having a carboxy group or an anhydride group thereof. The carboxylic acid-modified polyolefin (polyolefin having a carboxy group or an anhydride group thereof) can be obtained, for example, by chemically bonding an ethylenic unsaturated carboxylic acid or an anhydride thereof to an unmodified polyolefin by an addition reaction, a graft reaction, or the like.

The unmodified polyolefin used for producing the carboxylic acid-modified polyolefin is preferably a polyethylene.

The ethylenic unsaturated carboxylic acid and the anhydride thereof are exemplified by: monocarboxylic acids; monocarboxylic acid esters; dicarboxylic acids; dicarboxylic acid monoesters; dicarboxylic acid diesters; anhydrides of dicarboxylic acids; and the like. Specific examples of the ethylenic unsaturated carboxylic acid and the anhydride thereof include maleic acid, fumaric acid, itaconic acid, maleic anhydride, itaconic anhydride, maleic acid monomethyl esters, maleic acid monoethyl esters, maleic acid diethyl esters, fumaric acid monomethyl esters, and the like. Of these, anhydrides of dicarboxylic acid such as maleic anhydride and itaconic anhydride are preferred, and maleic anhydride is more preferred. In other words, the adhesive resin (d) is also preferably a maleic anhydride-modified polyolefin, and more preferably a maleic anhydride-modified polyethylene.

The carboxylic acid-modified polyolefin is obtained, for example, by introducing an ethylenic unsaturated carboxylic acid or an anhydride thereof into an unmodified polyolefin by an addition reaction or a graft reaction in the presence of a solvent such as xylene and a catalyst such as peroxide. The lower limit of the amount of the carboxylic acid or the anhydride thereof added to or grafted on the unmodified polyolefin (modification degree) is preferably 0.01% by mass, and more preferably 0.02% by mass with respect to the unmodified polyolefin. On the other hand, the upper limit of the addition amount or the grafting amount (modification degree) is preferably 15% by mass, and more preferably 10% by mass with respect to the unmodified polyolefin.

The acid-modified polyolefin such as the carboxylic acid-modified polyolefin has an acid value of preferably 0.3 mg KOH/g or more and 5.0 mg KOH/g or less, and more preferably 1.0 mg KOH/g or more and 3.0 mg KOH/g or less.

The adhesive resin (d) has an MFR (190 °C, load of 2.16 kg) of preferably 0.5 g/10 min or more and 12 g/10 min or less, and more preferably 1.0 g/10 min or more and 8.0 g/min or less.

The adhesive resin (d) may be used alone of one type, or in a combination of two or more types.

The content of the adhesive resin (d) in the adhesion resin layer (D) is preferably 80% by mass or more and 100% by mass or less, more preferably 90% by mass or more and 100% by mass or less, and still more preferably 97% by mass or more and 100% by mass or less. The adhesion resin layer (D) may contain, as a component other than the adhesive resin (d): an antioxidant; an ultraviolet ray-absorbing agent; a plasticizer; an antistatic agent; a lubricant; a colorant; a filler; a thermal stabilizer; an other resin aside from the adhesive resin (d); and the like.

The adhesion resin layer (D) may be an unstretched layer or a stretched layer.

The lower limit of the average thickness of the adhesion resin layer (D) is preferably 0.1 µm, more preferably 0.5 µm, and still more preferably 1 µm, and may be 2 µm. When the average thickness of the adhesion resin layer (D) is equal to or more than the lower limit, it is possible to, e.g., exhibit sufficient adhesiveness. In addition, it is also possible to more inhibit the occurrence of defects and coloring during recycling. The upper limit of the average thickness of the adhesion resin layer (D) is preferably 20 µm, more preferably 10 µm, and still more preferably 5 µm, and may be 3 µm. When the average thickness of the adhesion resin layer (D) is equal to or less than the upper limit, it is possible to, e.g., more inhibit the occurrence of defects and coloring during recycling.

The adhesion resin layer (D) may consist of a single layer or a plurality of layers.

### Moisture-Proof Resin Layer (E)

The moisture-proof resin layer (E) contains the polyethylene (e) as a principal component. When the moisture-proof resin layer (E) contains the polyethylene (e) as a principal component, the multilayer structure of the present invention can exhibit sufficient moisture-proof properties. In addition, when the moisture-proof resin layer (E) contains the polyethylene (e) as a principal component, the multilayer structure of the present invention enables forming paper containers having sufficient strength even in low-temperature environments, and also inhibits the occurrence of defects during recycling. The moisture-proof resin layer (E) may be a thermal adhesion layer for adhering the moisture-proof resin layers (E) to each other, or for adhering the moisture-proof resin layer (E) to another layer by heat sealing. The moisture-proof resin layer (E) may be the outermost layer of the multilayer structure, in light of a more enhancement of the strength of the resulting paper container in low-temperature environments.

The type of the polyethylene (e) is not particularly limited, and is exemplified by a high-density polyethylene, a low-density polyethylene, a linear low-density polyethylene, and the like. Of these, the polyethylene (e) is preferably a linear low-density polyethylene, a low-density polyethylene, or a mixture thereof. The linear low-density polyethylene is a resin obtained by polymerizing ethylene with α-olefin(s) having three or more carbon atoms. Examples of the α-olefin(s) having three or more carbon atoms include propylene, 1-butene, 1-pentene, 1-hexene, 1-octene, 1-decene, 1-dodecene, 4-methyl-1-pentene, and the like. Of these, the linear low-density polyethylene is preferably a linear low-density polyethylene obtained by polymerizing ethylene and α-olefin(s) having six or more carbon atoms, and is more preferably a linear low-density polyethylene obtained by polymerizing ethylene and α-olefin(s) having eight or more carbon atoms. In the case in which the number of carbon atoms of the α-olefin(s) to be copolymerized with the ethylene is relatively large, various mechanical strength such as puncture tensile strength and tensile strength may particularly improve. Furthermore, a metallocene catalyst is preferably used as the polymerization catalyst. The linear low-density polyethylene polymerized using a metallocene catalyst is produced by copolymerizing ethylene and α-olefin(s) in the presence of a catalyst that is formed from: a compound having, as the central metal atom, a transition metal of IV group in the periodic table having at least one ligand with a cyclopentadienyl skeleton (preferably, a compound having zirconium as the central metal atom); an organoaluminumoxy compound; and various components added as necessary. The linear low-density polyethylene polymerized using a metallocene catalyst is superior in melt formability, and a resulting multilayer film may be superior in balance of heat resistance, flexibility, and mechanical strength. Using such a polyethylene enables, e.g., more enhancing the strength, in low-temperature environments, of a paper container to be formed. One type of the polyethylene (e) or two or more types of the polyethylene (e) can be used.

The upper limit of the density of the polyethylene (e) can be, for example, 0.96 g/cm³, and is preferably 0.940 g/cm³, and more preferably 0.930 g/cm³. The lower limit of the density of the polyethylene (e) is preferably 0.880 g/cm³, and more preferably 0.890 g/cm³, and may be 0.900 g/cm³ or 0.910 g/cm³. When a polyethylene having a relatively low density is used as the polyethylene (e) in this way, it is possible to, e.g., more enhance the strength, in low-temperature environments, of the paper container to be formed.

The polyethylene (e) has an MFR (190 °C, load of 2.16 kg) of preferably 0.4 g/10 min or more and 4.0 g/10 min or less, and more preferably 0.8 g/10 min or more and 2.0 g/min or less.

The content of the polyethylene (e) in the moisture-proof resin layer (E) is preferably 80% by mass or more and 100% by mass or less, more preferably 90% by mass or more and 100% by mass or less, and still more preferably 97% by mass or more and 100% by mass or less. The moisture-proof resin layer (E) may contain, as a component other than the polyethylene (e): an antioxidant; an ultraviolet ray-absorbing agent; a plasticizer; an antistatic agent; a lubricant; a colorant; a filler; a thermal stabilizer; an other resin aside from the polyethylene (e); and the like.

The moisture-proof resin layer (E) may be an unstretched layer or a stretched layer.

The lower limit of the average thickness of the moisture-proof resin layer (E) is preferably 1 µm, more preferably 5 µm, still more preferably 10 µm, and yet more preferably 20 µm, and may be 30 µm, 40 µm, or 45 µm. When the average thickness of the moisture-proof resin layer (E) is equal to or more than the lower limit, paper containers having greater strength in low-temperature environments can be formed, due to, e.g. enabling sufficient heat sealing to be performed. In addition, when the average thickness of the moisture-proof resin layer (E) is equal to or more than the lower limit, it is possible to exhibit sufficient moisture-proof properties. The upper limit of the average thickness of the moisture-proof resin layer (E) is preferably 200 µm, and more preferably 100 µm, and may be 50 µm.

The moisture-proof resin layer (E) may consist of a single layer or a plurality of layers.

### Thermoplastic-Resin Layer (X)

The multilayer structure of the present invention preferably further includes a thermoplastic-resin layer (X) interposed between the paper layer (A) and the vapor-deposited inorganic layer (B) or the moisture-proof resin layer (E). In other words, the multilayer structure of the present invention preferably has a layer configuration in which the paper layer (A) and the vapor-deposited inorganic layer (B) or the moisture-proof resin layer (E) are laminated to each other via the thermoplastic-resin layer (X). In other words, the paper layer (A) is laminated, via the thermoplastic-resin layer (X), to one face of a laminate (composite film) of the vapor-deposited inorganic layer (B), the barrier resin layer (C), the adhesion resin layer (D), and the moisture-proof resin layer (E). When the multilayer structure includes such a thermoplastic-resin layer (X), it is possible to, e.g., enhance the adhesiveness between the paper layer (A) and the vapor-deposited inorganic layer (B) or the moisture-proof resin layer (E). In addition, when the paper layer (A) and the vapor-deposited inorganic layer (B) or the moisture-proof resin layer (E) are adhered to each other by way of the thermoplastic-resin layer (X), it is possible to more inhibit the occurrence of defects and coloring during recycling.

The thermoplastic-resin layer (X) contains a thermoplastic resin as a principal component. The thermoplastic resin is not particularly limited as long as the resin has a melting point of lower than 200 °C. The thermoplastic resin is exemplified by polyolefins, polystyrenes, polycarbonates, acrylic resins, the above-described adhesive resins (such as acid-modified polyolefins), and the like. Of these, polyolefins or acid-modified polyolefins are preferred, polyolefins are more preferred, and polyethylenes are still more preferred. When the thermoplastic-resin layer (X) contains such a thermoplastic resin as a principal component, it is possible to, e.g., inhibit the occurrence of coloring during recycling.

The content of the thermoplastic resin in the thermoplastic-resin layer (X) is preferably 80% by mass or more and 100% by mass or less, more preferably 90% by mass or more and 100% by mass or less, and still more preferably 97% by mass or more and 100% by mass or less. The thermoplastic-resin layer (X) may contain, as a component other than the thermoplastic resin: an antioxidant; an ultraviolet ray-absorbing agent; a plasticizer; an antistatic agent; a lubricant; a colorant; a filler; a thermal stabilizer; an other resin aside from the thermoplastic resin; and the like.

The lower limit of the average thickness of the thermoplastic-resin layer (X) is preferably 1 µm, more preferably 3 µm, still more preferably 5 µm, and yet more preferably 10 µm. When the average thickness of the thermoplastic-resin layer (X) is equal to or more than the lower limit, it is possible to, e.g., enhance the adhesiveness between the paper layer (A) and the vapor-deposited inorganic layer (B). The upper limit of the average thickness of the thermoplastic-resin layer (X) is preferably 100 µm, and more preferably 50 µm, and may be 30 µm.

The thermoplastic-resin layer (X) is preferably an extruded resin layer. In other words, it is preferred that the paper layer (A) and the vapor-deposited inorganic layer (B) (or the co-extruded film, described later, including the vapor-deposited inorganic layer (B) as one face of the co-extruded film) or the moisture-proof resin layer (E) (or the co-extruded film, described later, including the moisture-proof resin layer (E) as one face of the co-extruded film) are laminated by sandwich lamination. However, the paper layer (A) and the vapor-deposited inorganic layer (B) (or the co-extruded film, described later, including the vapor-deposited inorganic layer (B) as one face of the co-extruded film) or the moisture-proof resin layer (E) (or the co-extruded film, described later, including the moisture-proof resin layer (E) as one face of the co-extruded film) may be laminated by an other process, e.g., dry lamination or the like. In this case, the layer interposed between the paper layer (A) and the vapor-deposited inorganic layer (B) or the moisture-proof resin layer (E) may be an other adhesive-agent layer aside from the thermoplastic-resin layer (X).

### Co-Extruded Film

In the multilayer structure of the present invention, it is preferred that the laminate of the barrier resin layer (C), the adhesion resin layer (D), and the moisture-proof resin layer (E) is a co-extruded film. In other words, it is preferred that the barrier resin layer (C), the adhesion resin layer (D), and the moisture-proof resin layer (E) are formed by co-extrusion. As a result, it is possible to balance, at high levels: film properties, such as barrier properties and flexibility; processability; and economic efficiency. Furthermore, it is preferred that the vapor-deposited inorganic layer (B) is provided on the face of the co-extruded film on the barrier resin layer (C) side. In this mode, the vapor-deposited inorganic layer (B) may be provided by vapor deposition onto the face of the co-extruded film on the barrier resin layer (C) side. Using such a co-extruded film can improve the productivity, the gas barrier properties, and the like of the multilayer structure.

The lower limit of the average thickness of the co-extruded film is preferably 8 µm, more preferably 15 µm, and still more preferably 25 µm. When the average thickness of the co-extruded film is equal to or more than the lower limit, it is possible to more improve the gas barrier properties, the strength of the resulting paper containers in low-temperature environments, and the like. The upper limit of the average thickness of the co-extruded film is preferably 120 µm, more preferably 80 µm, and still more preferably 60 µm. When the average thickness of the co-extruded film is equal to or less than the upper limit, it is possible to, e.g., reduce the thickness of the multilayer structure. Note that the average thickness of the co-extruded film is equal to the total of the respective average thicknesses of all the layers of the co-extruded film.

In light of the gas barrier properties, recyclability, and economic efficiency, it is preferred that the average thickness of the barrier resin layer (C) of the co-extruded film is 0.2 µm or more and less than 30 µm. Furthermore, it is also preferred that a proportion accounted for by the average thickness of the barrier resin layer (C) in the average thickness of the co-extruded film is less than 25%. The average thickness of the barrier resin layer (C) is more preferably 0.4 µm or more and less than 15 µm, still more preferably 0.6 µm or more and less than 10 µm, and yet more preferably 0.8 µm or more and less than 5 µm. The proportion accounted for by the average thickness of the barrier resin layer (C) in the average thickness of the co-extruded film is more preferably less than 20%, and still more preferably less than 15%.

The co-extruded film may be an unstretched film that substantially has not been stretched, or may be a stretched film that has been uniaxially or biaxially stretched. In the case in which the co-extruded film is an unstretched film, the strength of the resulting paper container in low-temperature environments tends to increase. In the case in which the co-extruded film is a stretched film, the gas barrier properties tend to more increase.

For example, it is preferred that the co-extruded film is at least uniaxially stretched by three times or more and less than twelve times, and it is more preferred that the co-extruded film is at least uniaxially stretched by four times or more and less than ten times. In addition, it is also preferred that the co-extruded film is biaxially stretched each by three times or more and less than twelve times, and it is also more preferred that the co-extruded film is biaxially stretched each by 3.5 times or more and less than 10 times. When the co-extruded film is stretched by such ratio(s), it is possible to, e.g., more improve the gas barrier properties of the multilayer structure.

### Moisture-Proof Resin Layer (F)

The multilayer structure of the present invention preferably further includes a moisture-proof resin layer (F) other than the moisture-proof resin layer (E) described above. The moisture-proof resin layer (F) contains a polyethylene (f) as a principal component. When the multilayer structure further includes such a moisture-proof resin layer (F), it is possible to more improve the moisture-proof properties, the strength of the resulting paper container in low-temperature environments, and the like. The moisture-proof resin layer (F) may be a thermal adhesion layer for adhering the moisture-proof resin layers (F) to each other, or for adhering the moisture-proof resin layer (F) to another layer by heat sealing. The moisture-proof resin layer (F) may be the outermost layer of the multilayer structure, in light of a more enhancement of the strength of the resulting paper container in low-temperature environments. In addition, when the moisture-proof resin layer (F) contains the polyethylene (f) as a principal component, the occurrence of defects and coloring during recycling may be inhibited. Note that herein, a moisture-proof resin layer provided on the side (hereinafter, may be also referred to as "exposed-face side") of the paper layer (A) opposite the side thereof on which the vapor-deposited inorganic layer (B) and the like are provided is the moisture-proof resin layer (F). In addition, a moisture-proof resin layer that is different from the moisture-proof resin layer (E) included in the co-extruded film is the moisture-proof resin layer (F). On the other hand, in a case in which there are a plurality of moisture-proof resin layers constituting the co-extruded film, these moisture-proof resin layers are each the moisture-proof resin layer (E). In cases in which the multilayer structure includes a plurality of moisture-proof resin layers without including the above-described co-extruded film (except a case of being a moisture-proof resin layer on the exposed-face side of the paper layer (A)), such moisture-proof resin layers are each the moisture-proof resin layer (E).

Specific modes and suitable modes of the polyethylene (f), such as the type, physical properties, and the like of the polyethylene (f) are similar to those of the polyethylene (e) described above, except the MFR. For example, the polyethylene (f) has a density of preferably 0.880 g/cm³ or more and 0.940 g/cm³ or less. In addition, the polyethylene (f) is preferably a linear low-density polyethylene, a low-density polyethylene, or a mixture thereof. The polyethylene (f) has an MFR (190 °C, load of 2.16 kg) of preferably 0.4 g/10 min or more and 30.0 g/10 min or less, more preferably 0.8 g/10 min or more and 20.0 g/min or less, and still more preferably 1.0 g/10 min or more and 10.0 g/min or less.

Specific modes and suitable modes of the moisture-proof resin layer (F), such as the composition, the average thickness, and the like of the moisture-proof resin layer (F) are similar to those of the moisture-proof resin layer (E) described above. In one mode of the multilayer structure of the present invention, the moisture-proof resin layer (F) is preferably an unstretched layer. The moisture-proof resin layer (F) may be a stretched layer.

In the multilayer structure of the present invention, the arrangement position of the moisture-proof resin layer (F) is not particularly limited. However, it is preferred that the moisture-proof resin layer (F) is directly laminated to the co-extruded film. In the case of such a multilayer structure, it is possible to more enhance the strength in low-temperature environments, and the like, and also it is likely that the occurrence of defects and coloring during recycling is more reduced due to, e.g., an increase in the usage proportion of the polyethylene resins. In the multilayer structure in the present mode, the moisture-proof resin layer (F) can be laminated by, for example, melt-extruding the polyethylene (f) directly on a surface of the moisture-proof resin layer (E) of the co-extruded film.

In addition, the moisture-proof resin layer (F) may be laminated to a surface of the moisture-proof resin layer (E) of the co-extruded film via another layer (such as an adhesion resin layer, another adhesive-agent layer, or the like). In the multilayer structure in such a mode, the moisture-proof resin layer (F) can be laminated by subjecting the co-extruded film and a single-layer film of the moisture-proof resin layer (F) to, e.g., dry lamination or sandwich lamination.

Alternatively, the moisture-proof resin layer (F) may be laminated directly to the face of the paper layer (A) opposite the vapor-deposited inorganic layer (B), or may be laminated thereto via another layer. In the multilayer structure in such a mode, the moisture-proof resin layer (F) can be laminated by: melt-extruding the polyethylene (f) on a surface of the paper layer (A); or subjecting the paper layer (A) or the multilayer structure including the paper layer (A), and a single-layer film of the moisture-proof resin layer (F) to, e.g., dry lamination or sandwich lamination.

### Other Layer(s)

The multilayer structure of the present invention may include other layer(s) aside from the paper layer (A), the vapor-deposited inorganic layer (B), the barrier resin layer (C), the adhesion resin layer (D), the moisture-proof resin layer (E), the moisture-proof resin layer (F), and the thermoplastic-resin layer (X). The other layer(s) that may be included in the multilayer structure of the present invention is/are exemplified by another thermoplastic-resin layer, an adhesive-agent layer, a printed layer, and the like. However, the multilayer structure does not include a layer containing, as a principal component, a resin having a melting point of 200 °C or higher, and a metal layer having an average thickness of 1 µm or more. In a case in which the multilayer structure includes a layer containing, as a principal component, a resin having a melting point of 200 °C or higher (such as a layer containing polyethylene terephthalate as a principal component), and a metal layer having an average thickness of 1 µm or more (such as a layer of a metal foil having an average thickness of 1 µm or more), defects are likely to occur in the recycled products during melt forming for recycling. Due to also the multilayer structure not including such layers, defects are less likely to occur in the recycled products, whereby superior recyclability may be achieved.

Furthermore, it is preferred that the multilayer structure of the present invention does not include an adhesive-agent layer made from a curable adhesive agent. When such an adhesive-agent layer is not included, defects and the like during recycling are more inhibited.

### Layer Configuration, etc.

The multilayer structure of the present invention includes the paper layer (A), the vapor-deposited inorganic layer (B), the barrier resin layer (C), the adhesion resin layer (D), and the moisture-proof resin layer (E). Furthermore, the vapor-deposited inorganic layer (B), the barrier resin layer (C), the adhesion resin layer (D), and the moisture-proof resin layer (E) are all directly laminated in this order. It is preferred that the multilayer structure includes the paper layer (A), the vapor-deposited inorganic layer (B), the barrier resin layer (C), the adhesion resin layer (D), and the moisture-proof resin layer (E) in this order, particularly in light of more enhancement of the strength in low-temperature environments, and the like. The multilayer structure may include the paper layer (A), the moisture-proof resin layer (E), the adhesion resin layer (D), the barrier resin layer (C), and the vapor-deposited inorganic layer (B) in this order. The paper layer (A) and the vapor-deposited inorganic layer (B) or the moisture-proof resin layer (E) are typically laminated via another layer although they may be directly laminated to each other. The layer interposed between the paper layer (A) and the vapor-deposited inorganic layer (B) or the moisture-proof resin layer (E) may be the thermoplastic-resin layer (X) or another adhesive-agent layer. In addition, the multilayer structure may further include the moisture-proof resin layer (F).

The multilayer structure of the present invention preferably includes the paper layer (A) as one surface of the multilayer structure. In other words, one outermost layer of the multilayer structure is preferably the paper layer (A). However, in a case in which a paper container is formed from the multilayer structure, it is preferred that the face of the paper container from which the paper layer (A) is exposed is the outer face. In the case in which the multilayer structure includes the paper layer (A) as a surface of the multilayer structure, detection of the paper, more specifically, detection of the paper by, e.g., a measurement of infrared spectra using attenuated total reflection can be facilitated. Therefore, such a multilayer structure can enhance the recycling rate of the paper.

It is also preferred that the multilayer structure of the present invention includes the moisture-proof resin layer (E) or the moisture-proof resin layer (F) as one surface of the multilayer structure. In other words, one outermost layer of the multilayer structure is preferably the moisture-proof resin layer (E) or the moisture-proof resin layer (F). In a case in which a paper container is formed from the multilayer structure, it is preferred that the face of the paper container from which the moisture-proof resin layer (E) or the moisture-proof resin layer (F) is exposed is the inner face. In the case in which the multilayer structure includes the moisture-proof resin layer (E) or the moisture-proof resin layer (F) as a surface of the multilayer structure, either of these layers can be adhered by heat sealing, and a paper container having greater strength in low-temperature environments can be formed. In addition, in the case in which the multilayer structure includes the moisture-proof resin layer (E) or the moisture-proof resin layer (F) as a surface of the multilayer structure, detection of the polyethylene, more specifically, detection of the polyethylene by, e.g., a measurement of infrared spectra using attenuated total reflection can be facilitated. Therefore, such a multilayer structure can enhance the recycling rate of the polyethylene.

It is preferred that the multilayer structure of the present invention includes the paper layer (A) as one surface of the multilayer structure, and includes the moisture-proof resin layer (E) or the moisture-proof resin layer (F) as the other surface of the multilayer structure. In a case in which a paper container is formed from such a multilayer structure, it is preferred that the face of the paper container from which the paper layer (A) is exposed is the outer face, and the face of the paper container from which the moisture-proof resin layer (E) or the moisture-proof resin layer (F) is exposed is the inner face.

Specific layer configurations of the multilayer structure of the present invention are exemplified below. However, layer configurations of the multilayer structure are not limited to the following configurations. In each layer configuration exemplified below, "/" denotes direct lamination. Furthermore, "Ad" indicates any adhesive-agent layer. The adhesive-agent layer represented by Ad may be a layer containing an adhesive resin as a principal component (a layer made from a material similar to the material for the adhesion resin layer (D)).
(1) A/X/B/C/D/E
(2) A/Ad/B/C/D/E
(3) A/X/B/C/D/E/F
(4) A/X/B/C/D/E/Ad/F
(5) F/A/X/B/C/D/E
(6) F/A/Ad/B/C/D/E
(7) F/A/X/B/C/D/E/F
(8) F/A/X/B/C/D/E/Ad/F
(9) F/Ad/A/X/B/C/D/E
(10) F/Ad/A/Ad/B/C/D/E
(11) F/Ad/A/X/B/C/D/E/F
(12) F/Ad/A/X/B/C/D/E/Ad/F
(13) A/X/E/D/C/B/F
(14) A/X/E/D/C/B/Ad/F
(15) A/Ad/E/D/C/B/F
(16) A/Ad/E/D/C/B/Ad/F
(17) F/A/X/E/D/C/B/F
(18) F/A/X/E/D/C/B/Ad/F
(19) F/Ad/A/X/E/D/C/B/F
(20) F/Ad/A/X/E/D/C/B/Ad/F
(21) F/A/Ad/E/D/C/B/F
(22) F/A/Ad/E/D/C/B/Ad/F
(23) F/Ad/A/Ad/E/D/C/B/F
(24) F/Ad/A/Ad/E/D/C/B/Ad/F

The lower limit of a mass ratio of the paper layer (A) to the multilayer structure of the present invention may be, for example, 0.40 or 0.50 of the entire multilayer structure, but is preferably 0.60 thereof, more preferably 0.70 thereof, and still more preferably 0.75 thereof. When the mass ratio of the paper layer (A) is equal to or more than the lower limit, it is possible to, e.g., more enhance the strength, in low-temperature environments, of the paper container to be formed. On the other hand, the upper limit of the mass ratio of the paper layer (A) is preferably 0.95, more preferably 0.90, and still more preferably 0.86. When the mass ratio of the paper layer (A) is equal to or more than the lower limit, it is possible to, e.g., more improve the gas barrier properties, and the strength, in low-temperature environments, of the paper container to be formed.

In a portion of the multilayer structure of the present invention other than the paper layer (A), the lower limit of a ratio of the total of the average thicknesses of layers each containing a polyethylene resin as a principal component is preferably 0.75, more preferably 0.80, still more preferably 0.85, and yet more preferably 0.90. When in the portion of the multilayer structure of the present invention other than the paper layer (A), the ratio of the total of the average thicknesses of layers each containing a polyethylene resin as a principal component is increased, it is possible to, e.g., more inhibit the occurrence of coloring during recycling. In the portion of the multilayer structure of the present invention other than the paper layer (A), the upper limit of the ratio of the total of the average thicknesses of layers each containing a polyethylene resin as a principal component is preferably 0.995, and more preferably 0.99, and may be 0.98. The layers each containing a polyethylene resin as a principal component are exemplified by: the moisture-proof resin layer (E); the moisture-proof resin layer (F); the adhesion resin layer (D) in a case in which the adhesive resin (d) is, e.g., an acid-modified polyethylene; the thermoplastic-resin layer (X) containing a polyethylene resin (a polyethylene or a modified polyethylene) as a principal component; and the like.

In the portion of the multilayer structure of the present invention other than the paper layer (A), the lower limit of a ratio of the total of the average thicknesses of layers each containing, as a principal component, a resin containing an ethylene unit is preferably 0.95, more preferably 0.98, and still more preferably 0.99. When in the portion of the multilayer structure other than the paper layer (A), the ratio of the total of the average thicknesses of layers each containing, as a principal component, a resin containing an ethylene unit is increased, it is possible to, e.g., more inhibit the occurrence of defects and coloring, due to, e.g., an improvement in the compatibility during recycling. In the portion of the multilayer structure of the present invention other than the paper layer (A), the upper limit of the ratio of the total of the average thicknesses of layers each containing, as a principal component, a resin containing an ethylene unit may be e.g., 0.9999. The layers each containing, as a principal component, a resin containing an ethylene unit are exemplified by the barrier resin layer (C), in addition to the above-described layers each containing a polyethylene resin as a principal component.

In the portion of the multilayer structure of the present invention other than the paper layer (A), the lower limit of a ratio of the total of the average thicknesses of layers each containing, as a principal component, a thermoplastic resin having a melting point of lower than 200 °C is preferably 0.95, more preferably 0.98, and still more preferably 0.99. When in the portion of the multilayer structure of the present invention other than the paper layer (A), the ratio of the total of the average thicknesses of thermoplastic resins each having a melting point of lower than 200 °C is increased, it is possible to, e.g., more inhibit the occurrence of defects and coloring, due to, e.g., an improvement in melt formability during recycling. In the portion of the multilayer structure of the present invention other than the paper layer (A), the upper limit of the ratio of the total of the average thicknesses of layers each containing, as a principal component, a thermoplastic resin having a melting point of lower than 200 °C may be e.g., 0.9999.

The lower limit of the average thickness of the multilayer structure of the present invention (the average thickness of the entire multilayer structure) is preferably 150 µm, more preferably 200 µm, still more preferably 250 µm, and yet more preferably 300 µm. When the average thickness of the multilayer structure is equal to or more than the lower limit, it is possible to, e.g., more enhance the strength, in low-temperature environments, of the paper container to be formed. On the other hand, the upper limit of the average thickness of the multilayer structure is preferably 1,000 µm, and possibly 700 µm or 500 µm. When the average thickness of the multilayer structure is equal to or less than the upper limit, it is possible to, e.g., improve the formability.

The multilayer structure of the present invention has an oxygen transmission rate of preferably less than 0.5 cc/(m²·day·atm), and more preferably less than 0.1
cc/(m²·day·atm) under a condition involving 20 °C and 65% RH, measured in accordance with a method disclosed in JIS K 7126-2:2006. When the oxygen transmission rate is less than the upper limit, the multilayer structure can be suitably used particularly as, e.g., a material for forming paper containers. On the other hand, the lower limit of this oxygen transmission rate may be 0.001 cc/(m²·day·atm) or may be 0.01 cc/(m²·day·atm).

After the multilayer structure of the present invention is subjected to folding processing that includes: folding the multilayer structure in four such that the paper layer (A) is closer to the outside of the multilayer structure than the moisture-proof resin layer (E) is; and leaving the multilayer structure to stand in this state for one minute while applying a load of 5 kg to the top of the multilayer structure, the multilayer structure has an oxygen transmission rate of preferably less than 1.0 cc/(m²·day·atm), and more preferably less than 0.2 cc/(m²·day·atm) under a condition involving 20 °C and 65% RH, measured in accordance with the method disclosed in JIS K 7126-2:2006. When the oxygen transmission rate after the folding processing is less than the upper limit, the multilayer structure can be suitably used particularly as, e.g., a material for forming paper containers that are typically subjected to folding processing. On the other hand, the lower limit of the oxygen transmission rate after this folding processing may be 0.002 cc/(m²·day·atm) or may be 0.02 cc/(m²·day·atm).

The multilayer structure of the present invention can be ground for recycling, and separated into the paper layer (A) and the portion other than the paper layer (A). The portion other than the paper layer (A) can also be used as a melt-forming material. When the portion of the multilayer structure other than the paper layer (A) is used as a melt-forming material, it is possible to obtain melt-formed products (recycled products) with less occurrence of defects. The portion of the multilayer structure other than the paper layer (A) can be mixed, for use, with other melt-forming material(s) (another recycled resin, an unused resin, and/or the like). In addition, the separated paper layer (A) can also be recycled.

A method for producing the multilayer structure of the present invention is not particularly limited. For example, the multilayer structure is obtained by the following steps (1) to (3). (1)A co-extruded film including the barrier resin layer (C), the adhesion resin layer (D), and the moisture-proof resin layer (E) is produced by co-extrusion. (2) The vapor-deposited inorganic layer (B) is provided on the face of the co-extruded film on the barrier resin layer (C) side to produce a composite film. (3) Paper as the paper layer (A) and the composite film are laminated by, e.g., a well-known means such as sandwich lamination or dry lamination, such that the paper layer (A) faces the vapor-deposited inorganic layer (B) or the moisture-proof resin layer (E). Also in a case in which the multilayer structure of the present invention further includes the moisture-proof resin layer (F), the moisture-proof resin layer (F) can be provided by a well-known process such as melt extrusion or dry lamination.

Alternatively, the composite film may be produced by, e.g., providing the vapor-deposited inorganic layer (B) onto a single-layer film of the barrier resin layer (C), and then laminating the adhesion resin layer (D) and the moisture-proof resin layer (E) thereto. Alternatively, a double-layer film of the vapor-deposited inorganic layer (B) and the barrier resin layer (C) may be adhered to the paper layer, and then the adhesion resin layer (D) and the moisture-proof resin layer (E) may be laminated thereto.

The multilayer structure of the present invention is suitably used as a material for forming paper containers. The paper container has intended usages that are not particularly limited, and may be a container for containing solid substances such as food, but is preferably a container for containing liquid. The multilayer structure may be used for intended usages other than a material for forming paper containers.

### Paper Container for Liquid

A paper container for liquid of the present invention is a paper container formed from the multilayer structure of the present invention. The paper container has superior gas barrier properties even at the portions thereof which had been subjected to folding processing, has sufficient strength even in low-temperature environments, and inhibits the occurrence of defects during recycling. The paper container for liquid is suitably used as a container for containing: a beverage such as milk or juice; a liquid food such as soup; an alcoholic beverage such as sake or shochu; or any of various types of liquids other than foods.

The paper container for liquid of the present invention is formed by: folding the multilayer structure of the present invention into, e.g., a box shape; and adhering the overlapping portions by, e.g., heat sealing. It is preferred that the paper layer (A) is positioned as the outer face of the paper container for liquid. Furthermore, it is preferred that the moisture-proof resin layer (E) or the moisture-proof resin layer (F) is positioned as the inner face of the paper container for liquid.

The shape of the paper container for liquid of the present invention is not limited to the box shape, and may be any of other shapes (for example, a bag shape or the like). The paper container for liquid may be adhered by an other process aside from heat sealing, and may have portions adhered by heat sealing and portions adhered by an other process. In addition, the paper container for liquid may further include a member(s) other than the multilayer structure of the present invention.

### EXAMPLES

Hereinafter, the present invention will be described in detail by way of Examples, but the present invention is not limited to these Examples.

### Example 1

### (1) Production of EVOH (c)-Containing Resin Composition for Barrier Resin Layer (C)

An EVOH (c-1) (ethylene unit content of 32 mol%; degree of saponification of 99.99 mol%; MFR (190 °C, load of 2.16 kg) of 1.6 g/10 min; containing 220 ppm sodium acetate in terms of sodium ion equivalent, 30 ppm phosphate ion in terms of phosphate radical equivalent, and 150 ppm boric acid in terms of boron element equivalent; and containing no multivalent metal ion), and magnesium stearate (Mg-St) were melt-kneaded so that a resin composition to be obtained had a content of magnesium ion being 50 ppm and pellets of the resin composition for the barrier resin layer (C) were obtained. An extruder used for the melt kneading was a twin-screw extruder with D (mm) = 25, and included fully intermeshing co-rotation type screws with L/D = 25. Furthermore, the resin temperature was set to 220 °C.

### (2) Adhesive Resin (d)-Containing Resin Composition for Adhesion Resin Layer (D)

A maleic anhydride-modified polyethylene "ADMER (trademark) NF518" (MFR (190 °C, load of 2.16 kg) of 3.1 g/10 min; density of 0.91 g/cm³; acid value of 1.8 mg KOH/g), manufactured by Mitsui Chemicals, Inc., was used as an adhesive resin (d-1). Pellets of this adhesive resin (d-1) were used as pellets of a resin composition for the adhesion resin layer (D) without any modification.

### (3) Polyethylene (e)-Containing Resin Composition for Moisture-Proof Resin Layer (E)

Pellets of a low-density polyethylene (LDPE) "INNATE (trademark) TF80" (MFR (190 °C, load of 2.16 kg) of 1.6 g/10 min; density of 0.926 g/cm³), manufactured by DOW Inc., were used as a polyethylene (e-1). Pellets of the polyethylene (e-1) were used as pellets of a resin composition for the moisture-proof resin layer (E) without any modification.

### (4) Production of Co-Extruded Film

The pellets of the resin compositions (1) to (3) were used to produce a co-extruded film having layer thicknesses and a layer configuration of C/D/E = 4 µm/ 4 µm/ 32 µm = EVOH 4/ tie 4/ PE 32 by using co-extrusion film formation equipment. The "tie" denotes an adhesive resin. Furthermore, the average thickness of each layer may also be simply referred to as a layer thickness. The extruders were each a single-screw extruder having D (mm) = 30, and each included a full flight screw having L/D = 28 and a compression ratio of 3.0. As the die, a feedblock-laminating T-die having a width of 350 mm was used. Temperature conditions in this procedure are shown below.
extrusion temperatures of barrier resin layer (C): feeding zone/ compression zone/ metering zone/ adapter = 175 °C/ 220 °C/ 220 °C/ 220 °C
extrusion temperatures of adhesion resin layer (D): feeding zone/ compression zone/ metering zone/ adapter = 175 °C/ 220 °C/ 220 °C/ 220 °C
extrusion temperatures of moisture-proof resin layer (E): feeding zone/ compression zone/ metering zone/ adapter = 175 °C/ 220 °C/ 220 °C/ 220 °C
die temperature: 220 °C
temperature of cooling rolls: 80 °C

### (5) Production of Composite Film

A vapor-deposited aluminum metal layer (vapor-deposited inorganic layer (B)) having a thickness of 50 nm was laminated by a well-known vacuum vapor deposition process to a surface of the barrier resin layer (C) of the co-extruded film obtained in (4) described above, so that a composite film having layer thicknesses and a layer configuration of B/C/D/E = 50 nm/ 4 µm/ 4 µm/ 32 µm = Al (50 nm)/ EVOH 4/ tie 4/ PE 32 was produced.

### (6) Production of Multilayer Structure

As the paper layer (A), a white paperboard having a basis weight of 250 g/m² was prepared. In addition, as a resin for extrusion lamination (thermoplastic resin), a linear low-density polyethylene (LLDPE) "LUMITAC (trademark) BL 600K" (MFR (190 °C, load of 2.16 kg) of 21 g/10 min; density of 0.898 g/cm³), manufactured by Tosoh Corporation, was prepared.

The white paperboard was fed from a first feeding section of extrusion lamination equipment, the composite film obtained in (5) described above was fed from a second feeding section thereof, and the linear low-density polyethylene was extruded at 300 °C into between the white paperboard and the composite film, so that the white paperboard and the composite film were laminated via a linear low-density polyethylene layer (thermoplastic-resin layer (X)), which had an average thickness of 20 µm, to produce a multilayer structure. The multilayer structure had layer thicknesses and a layer configuration of A/X/B/C/D/E = 250 g/m²/ 20 µm/ 50 nm/ 4 µm/ 4 µm/ 32 µm = paper/ PE 20/ Al (50 nm)/ EVOH 4/ tie 4/ PE 32.

Note that the resins constituting the barrier resin layer (C), the adhesion resin layer (D), the moisture-proof resin layer (E), and the thermoplastic-resin layer (X) in the multilayer structure obtained each have a predetermined MFR at 190 °C. Therefore, it is clear that the melting points of these resins are less than 200 °C. The same applies to other Examples described later.

### (7) Oxygen Transmission Rate (OTR) of Multilayer Structure

On the multilayer structure obtained in (6) described above, an oxygen transmission rate was measured in accordance with the method disclosed in JIS K 7126-2 (equal-pressure method; 2006), in which the paper layer was positioned on an oxygen supply side and the composite film was positioned on a carrier gas side. Specifically, using an oxygen transmission measuring device ("MOCON OX-TRAN2/21", manufactured by Modern Controls Inc.), an oxygen transmission rate (unit: cc/(m²·day·atm)) was measured under the conditions involving: temperature: 20° C, humidity of the oxygen supply side: 65% RH, humidity of the carrier gas side: 65% RH, oxygen pressure: 1 atm, and carrier gas pressure: 1 atm, and determined in accordance with the following criteria. As the carrier gas, a nitrogen gas containing a 2% by volume hydrogen gas was used. The results are shown in Table 2. In the cases of A to D, it was assessed that the gas barrier properties were superior in a state without being subjected to folding processing.

### Determination: Criteria

A: less than 0.05 cc/(m²·day·atm)
B: 0.05 cc/(m²·day·atm) or more and less than 0.1 cc/(m²·day·atm)
C: 0.1 cc/(m²·day·atm) or more and less than 0.5 cc/(m²·day·atm)
D: 0.5 cc/(m²·day·atm) or more and less than 2.0 cc/(m²·day·atm)
E: 2.0 cc/(m²·day·atm) or more

### (8) Oxygen Transmission Rate of Multilayer Structure after Folding Processing (OTR after Folding)

The multilayer structure obtained in (6) described above was cut into 10 cm square. The square multilayer structure was subjected to folding processing that included: folding the multilayer structure in four such that the paper layer (A) was closer to the outside of the multilayer structure than the moisture-proof resin layer (E) was; and leaving the multilayer structure to stand in this state for one minute while applying a load of 5 kg to the top of the multilayer structure. After the folding processing, the multilayer structure that was unfolded by unloading the load of 2 kg, and an oxygen transmission rate was measured in accordance with the method disclosed in JIS K 7126-2 (equal-pressure method; 2006), in which the paper layer (A) was positioned on an oxygen supply side and the composite film was positioned on a carrier gas side. Specifically, using an oxygen transmission measuring device ("MOCON OX-TRAN2/21", manufactured by Modern Controls Inc.), an oxygen transmission rate (unit: cc/(m²·day·atm)) was measured under the conditions involving: temperature: 20° C, humidity of the oxygen supply side: 65% RH, humidity of the carrier gas side: 65% RH, oxygen pressure: 1 atm, and carrier gas pressure: 1 atm, and determined in accordance with the following criteria. As the carrier gas, a nitrogen gas containing a 2% by volume hydrogen gas was used. The results are shown in Table 2. In the cases of A to D, it was assessed that the gas barrier property was superior in the state after the folding processing.

### Determination: Criteria

A: less than 0.1 cc/(m²·day·atm)
B: 0.1 cc/(m²·day·atm) or more and less than 0.2 cc/(m²·day·atm)
C: 0.2 cc/(m²·day·atm) or more and less than 1.0 cc/(m²·day·atm)
D : 1.0 cc/(m²·day·atm) or more and less than 4.0 cc/(m²·day·atm)
E: 4.0 cc/(m²·day·atm) or more

### (9) Resistance of Multilayer Structure to Dropped Bag Breaking (Drop Strength (Low Temperature))

The multilayer structure obtained in (6) described above was cut into two sheets having a size of 12 cm × 24 cm. The sheets were overlaid with the respective paper layers (A) facing outward on each side, and three sides of the sheets were subjected to heat sealing with a width of 5 mm. Next, filling with 500 g of water from the opening, followed by heat sealing of the remaining sides gave a water-filled paper container. This water-filled paper container was dropped freely from a height of 1 m in an upright position at 5 °C three times, and examined for water leakage. Ten water-filled paper containers were produced by the above-described process, evaluated, and determined in accordance with the following criteria. The results are shown in Table 2. In the cases of A to D, it was assessed that forming paper containers having sufficient strength even in low-temperature environments was enabled.

### Determination: Criteria

A: Water leakage being observed in none of ten
B: Water leakage being observed in one to two of ten
C: Water leakage being observed in three to five of ten
D: Water leakage being observed in six to eight of ten
E: Water leakage being observed in nine to ten of ten

### (10) Paper Detectability

On the multilayer structure obtained in (6) described above, infrared spectra of both the faces were measured by attenuated total reflection. In the case in which paper was detected on either face, it was considered acceptable (OK), while in the case in which no paper was detected on both the faces, it was considered unacceptable (NG). The results are shown in Table 2.

### (11) Polyethylene Detectability

On the multilayer structure obtained in (6) described above, infrared spectra of both the faces were measured by attenuated total reflection. In the case in which polyethylene was detected on either face, it was considered acceptable (OK), while in the case in which no paper was detected in both the faces, it was considered unacceptable (NG). The results are shown in Table 2.

### (12) Recyclability of Portion of Multilayer Structure Made from Materials other than Paper Layer and Separated from Multilayer Structure

The multilayer structure obtained in (6) described above was ground to a size of 4 mm square or less. The ground multilayer structure was stirred in an aqueous sodium hydroxide solution (1 mol/L) at 90 °C for 30 min, so that the paper layer (A) was removed from the multilayer structure. Then, a portion of the multilayer structure made from materials other than the paper layer (A) and floating in the aqueous solution was recovered, washed with water at room temperature, and then dried at 60 °C for 24 hours. The recovered materials and a low-density polyethylene resin (LDPE) "NOVATEC (trademark) LD LJ400" (MFR (190 °C, load of 2.16 kg) of 1.5 g/10 min; density of 0.921 g/cm³), manufactured by Japan Polyethylene Corporation, were blended in a mass ratio (recovered materials/ low-density polyethylene resin) of 40/60, and the blend was subjected to single-layer film formation under the following extrusion conditions, so that a single-layer film having a thickness of 50 µm was obtained. Furthermore, as a control, only the above-described low-density polyethylene resin was used to similarly obtain a single-layer film having a thickness of 50 µm. The extruder was a single-screw extruder having D (mm) = 20, and included a full flight screw having L/D = 20 and a compression ratio of 3.5. As the die, a T-die with a width of 300 mm was used. The thickness of each single-layer film was adjusted by appropriately changing the screw rotation speed and the roll drawing speed. The temperature conditions in this procedure are shown below.
extrusion temperatures: feeding zone/ compression zone/ metering zone/ adapter = 175 °C/ 220 °C/ 220 °C/ 220 °C
die temperature: 220 °C
temperature of cooling rolls: 80 °C

The coloring state and defects of each single-layer film obtained were visually evaluated, and determined in accordance with the following criteria. The results are shown in Table 2. In the cases of A to D, it was assessed that the occurrence of coloring or defects during recycling was inhibited.

### Determination of Coloring: Criteria

A: Smaller degree of hue change being observed, compared to the control
B: Mild coloring being observed, compared to the control
C: Moderate coloring being observed, compared to the control
D: Significant coloring being observed, compared to the control
E: Significant coloring being observed, compared to the control, and unevenness being also observed

### Determination of Defects: Criteria

A: The amount of aggregates being almost the same as that of the control
B: The amount of small aggregates being slightly larger than that of the control
C: The amount of small aggregates being larger than that of the control
D: The amount of large aggregates being larger than that of the control
E: The amount of large aggregates being much larger than that of the control

### Example 2

Pellets of each resin composition, as well as a co-extruded film, a composite film, and a multilayer structure were produced, and the various types of measurements and evaluations were performed similarly to Example 1, except that an EVOH (c-2) (ethylene unit content of 27 mol%; degree of saponification of 99.99 mol%; MFR (210 °C, load of 2.16 kg) of 4.0 g/10 min; containing 220 ppm sodium acetate in terms of sodium ion equivalent, 30 ppm phosphate ion in terms of phosphate radical equivalent, and 150 ppm boric acid in terms of boron element equivalent; and containing no multivalent metal ion) was used in place of the EVOH (c-1). The results are shown in Table 2.

### Example 3

Pellets of each resin composition, as well as a co-extruded film, a composite film, and a multilayer structure were produced, and the various types of measurements and evaluations were performed similarly to Example 1, except that an EVOH (c-3) (ethylene unit content of 44 mol%; degree of saponification of 99.99 mol%; MFR (190 °C, load of 2.16 kg) of 5.7 g/10 min; containing 220 ppm sodium acetate in terms of sodium ion equivalent, and 30 ppm phosphate ion in terms of phosphate radical equivalent; and containing no multivalent metal ion) was used in place of the EVOH (c-1). The results are shown in Table 2.

### Example 4

Pellets of each resin composition, as well as a co-extruded film, a composite film, and a multilayer structure were produced, and the various types of measurements and evaluations were performed similarly to Example 1, except that a mixture (dry blend) of the EVOH (c-2) and the EVOH (c-3) in a mass ratio of 75/25 was used in place of the EVOH (c-1). The results are shown in Table 2.

### Example 5

Pellets of each resin composition, as well as a co-extruded film, a composite film, and a multilayer structure were produced, and the various types of measurements and evaluations were performed similarly to Example 1, except that the average thickness of the vapor-deposited aluminum metal layer was changed to 100 nm. The results are shown in Table 2.

### Example 6

Pellets of each resin composition, as well as a co-extruded film, a composite film, and a multilayer structure were produced, and the various types of measurements and evaluations were performed similarly to Example 1, except that the vapor-deposited aluminum metal layer was changed to a vapor-deposited alumina (AlOx) layer. The results are shown in Table 2.

### Example 7

Pellets of each resin composition, as well as a co-extruded film, a composite film, and a multilayer structure were produced, and the various types of measurements and evaluations were performed similarly to Example 1, except that the vapor-deposited aluminum metal layer was changed to a vapor-deposited silica (SiOx) layer. The results are shown in Table 2.

### Example 8

Pellets of each resin composition, as well as a co-extruded film, a composite film, and a multilayer structure were produced, and the various types of measurements and evaluations were performed similarly to Example 1, except that no magnesium stearate was used. The results are shown in Table 2.

### Examples 9 to 10

Pellets of each resin composition, as well as co-extruded films, composite films, and multilayer structures were produced, and the various types of measurements and evaluations were performed similarly to Example 1, except that each amount of magnesium stearate, in terms of magnesium ion equivalent, to be kneaded with the EVOH (c-1) was changed as shown in Table 1. The results are shown in Table 2.

### Examples 11 to 12

Pellets of each resin composition, as well as co-extruded films, composite films, and multilayer structures were produced, and the various types of measurements and evaluations were performed similarly to Example 1, except that magnesium stearate to be kneaded with the EVOH (c-1) was changed to calcium stearate (Ca-St) in Example 11, and to zinc stearate (Zn-St) in Example 12. The results are shown in Table 2.

### Example 13

Pellets of each resin composition, as well as a co-extruded film, a composite film, and a multilayer structure were produced, and the various types of measurements and evaluations were performed similarly to Example 1, except that a polyethylene (e-2) (a linear low-density polyethylene (mLLDPE) "Evolue (trademark) SP1510" (MFR (190 °C, load of 2.16 kg) of 1.0 g/10 min; density of 0.915 g/cm³), manufactured by Prime Polymer Co., Ltd., and polymerized using a metallocene catalyst) was used in place of the polyethylene (e-1). The results are shown in Table 2.

### Example 14

Pellets of each resin composition, as well as a co-extruded film, a composite film, and a multilayer structure were produced, and the various types of measurements and evaluations were performed similarly to Example 1, except that a polyethylene (e-3) (a high-density polyethylene (HDPE) "NOVATEC (trademark) HD HY540" (MFR (190 °C, load of 2.16 kg) of 1.0 g/10 min; density of 0.960 g/cm³), manufactured by Japan Polyethylene Corporation) was used in place of the polyethylene (e-1). The results are shown in Table 2.

### Example 15

Pellets of resin each composition, as well as a co-extruded film, a composite film, and a multilayer structure were produced, and the various types of measurements and evaluations were performed similarly to Example 1, except that the average thickness of the barrier resin layer (C) was changed to 12 µm. The results are shown in Table 2.

### Example 16

Pellets of each resin composition, as well as a co-extruded film, a composite film, and a multilayer structure were produced, and the various types of measurements and evaluations were performed similarly to Example 1, except that the average thickness of the moisture-proof resin layer (E) was changed to 52 µm. The results are shown in Table 2.

### Example 17

Pellets of each resin composition, as well as a co-extruded film, a composite film, and a multilayer structure were produced, and the various types of measurements and evaluations were performed similarly to Example 1, except that the paper layer and the composite film were laminated to each other by well-known dry lamination in place of the extrusion lamination. The results are shown in Table 2. Note that as an adhesive agent for the dry lamination, a two-component reactive polyurethane adhesive agent was used such that the average thickness after drying became 4 µm.

### Example 18

A linear low-density polyethylene (LLDPE) "LUMITAC (trademark) BL 600K" (MFR (190 °C, load of 2.16 kg) of 21 g/10 min; density of 0.898 g/cm³), manufactured by Tosoh Corporation, was extruded at 300 °C onto the exposed face of the paper layer (A) of the multilayer structure obtained by procedures similar to those in Example 1, so that a linear low-density polyethylene layer having an average thickness of 30 µm was laminated as the moisture-proof resin layer (F) to thus produce a multilayer structure, and the various types of measurements and evaluations were performed. The results are shown in Table 2.

### Example 19

As production of the co-extruded film, a co-extruded film having layer thicknesses and a layer configuration of C/D/E = 5 µm/ 5 µm/ 115 µm = EVOH 5/ tie 5/ PE 115 was produced. The co-extruded film was stretched by five times in the longitudinal direction to produce a stretched co-extruded film of 1 µm/ 1 µm/ 23 µm = EVOH 1/ tie 1/ PE 23. Pellets of each resin composition, as well as a co-extruded film, a composite film, and a multilayer structure were produced, and the various types of measurements and evaluations were performed similarly to Example 1, except that this co-extruded film was used. The results are shown in Table 2.

### Example 20

An EVOH (c-4) (ethylene unit content of 44 mol%; degree of saponification of 99.99 mol%; modification degree of epoxypropane of 4.6 mol%; MFR (190 °C, load of 2.16 kg) of 5.6 g/10 min; containing 220 ppm sodium acetate in terms of sodium ion equivalent, 30 ppm phosphate ion in terms of phosphate radical equivalent, 150 ppm boric acid in terms of boron element equivalent, and 30 ppm zinc acetate in terms of zinc ion equivalent) was used in place of the EVOH (c-1). In addition, as production of the co-extruded film, a co-extruded film having layer thicknesses and a layer configuration of C/D/E = 32 µm/ 32 µm/ 736 µm = EVOH 32/ tie 32/ PE 736 was produced. The co-extruded film was stretched by four times in the longitudinal direction, and then stretched by eight times in the transverse direction to produce a stretched co-extruded film of 1 µm/ 1 µm/ 32 µm = EVOH 1/ tie 1/ PE 32. The co-extruded film was used. Pellets of each resin composition, as well as a co-extruded film, a composite film, and a multilayer structure were produced, and the various types of measurements and evaluations were performed similarly to Example 1 except these points. The results are shown in Table 2.

### Example 21

A linear low-density polyethylene (LLDPE) "LUMITAC (trademark) BL 600K" (MFR (190 °C, load of 2.16 kg) of 21 g/10 min; density of 0.898 g/cm³), manufactured by Tosoh Corporation, was extruded at 300 °C onto the exposed face of the moisture-proof resin layer (E) of the multilayer structure obtained by procedures similar to those in Example 20, so that a linear low-density polyethylene layer having an average thickness of 30 µm was laminated as the moisture-proof resin layer (F) to thus produce a multilayer structure, and the various types of measurements and evaluations were performed. The results are shown in Table 2.

### Example 22

Pellets of each resin composition, as well as a co-extruded film, a composite film, and a multilayer structure were produced, and the various types of measurements and evaluations were performed similarly to Example 1, except that white paper having a basis weight of 50 g/m² was used as the paper layer (A). The results are shown in Table 2.

### Example 23

Pellets of each resin composition, as well as a co-extruded film, a composite film, and a multilayer structure were produced, and the various types of measurements and evaluations were performed similarly to Example 1, except that white paper having a basis weight of 80 g/m² was used as the paper layer (A). The results are shown in Table 2.

### Example 24

Pellets of each resin composition, as well as a co-extruded film, a composite film, and a multilayer structure were produced, and the various types of measurements and evaluations were performed similarly to Example 1, except that white paper having a basis weight of 150 g/m² was used as the paper layer (A). The results are shown in Table 2.

### Example 25

Pellets of each resin composition, as well as a co-extruded film, a composite film, and a multilayer structure were produced, and the various types of measurements and evaluations were performed similarly to Example 21, except that in the production of the multilayer structure, the moisture-proof resin layer (E) of the composite film and the paper layer (A) were laminated via the thermoplastic-resin layer (X), and furthermore, the moisture-proof resin layer (F) was provided on the vapor-deposited inorganic layer (B) that was exposed. The results are shown in Table 2.

### Comparative Example 1

Pellets of each resin composition, as well as a composite film, and a multilayer structure were produced, and the various types of measurements and evaluations were performed similarly to Example 1, except that the following composite film was produced and used in place of the composite film produced in Example 1. A single-layer film of the moisture-proof resin layer (E) having an average thickness of 40 µm was used without laminating the barrier resin layer (C) and the adhesion resin layer (D) thereto. One face of the moisture-proof resin layer (E) was subjected to a corona discharge treatment by a well-known process, and a vapor-deposited aluminum metal layer was laminated to the face subjected to the corona discharge treatment to produce a composite film. The results are shown in Table 2.

### Comparative Example 2

Pellets of each resin composition, as well as a multilayer structure were produced, and the various types of measurements and evaluations were performed similarly to Example 1, except that in place of the composite film, a single-layer film of the moisture-proof resin layer (E) having an average thickness of 40 µm was used without laminating the barrier resin layer (C), the adhesion resin layer (D), and the vapor-deposited aluminum metal layer thereto. The results are shown in Table 2.

### Comparative Example 3

Pellets of each resin composition, as well as a co-extruded film, and a multilayer structure were produced, and the various types of measurements and evaluations were performed similarly to Example 1, except that the vapor-deposited aluminum metal layer was not laminated. The results are shown in Table 2.

### Comparative Example 4

Pellets of each resin composition, as well as a composite film, and a multilayer structure were produced, and the various types of measurements and evaluations were performed similarly to Example 21, except that a biaxially stretched polyethylene terephthalate film "Lumirror (trademark) P60" (PET; melting point of 256 °C; average thickness of 12 µm), manufactured by Toray Industries, Inc., was used in place of the co-extruded film, and both the faces of the PET were subjected to a corona discharge treatment by a well-known process, and after the corona discharge treatment, a vapor-deposited aluminum metal layer was laminated to one face of the PET, while the moisture-proof resin layer (F) was laminated to the face of the PET that was not subjected to the vapor deposition. The results are shown in Table 2.

### Comparative Example 5

Pellets of each resin composition, as well as a co-extruded film, a composite film, and a multilayer structure were produced, and the various types of measurements and evaluations were performed similarly to Example 1, except that: a maleic anhydride-modified polypropylene "ADMER (trademark) QF551" (MFR (230 °C, load of 2.16 kg) of 5.7 g/10 min; density of 0.89 g/cm³), manufactured by Mitsui Chemicals, Inc., was used in place of the adhesive resin (d-1); a polypropylene "NOVATEC (trademark) PP EA7AD" (MFR (230 °C, load of 2.16 kg) of 1.4 g/10 min; density of 0.90 g/cm³), manufactured by Japan Polypropylene Corporation, was used in place of the polyethylene (e-1); and a polypropylene "NOVATEC (trademark) PP FL03H" (MFR (230 °C, load of 2.16 kg) of 26 g/10 min; density of 0.90 g/cm³), manufactured by Japan Polypropylene Corporation, was used in place of the linear low-density polyethylene used as the thermoplastic-resin layer (X). The results are shown in Table 2.

### Comparative Example 6

Pellets of each resin composition, as well as a co-extruded film, a composite film, and a multilayer structure were produced, and the various types of measurements and evaluations were performed similarly to Comparative Example 5, except that a linear low-density polyethylene (LLDPE) "LUMITAC (trademark) BL 600K" (MFR (190 °C, load of 2.16 kg) of 21 g/10 min; density of 0.898 g/cm³), manufactured by Tosoh Corporation, was extruded at 300 °C onto the exposed face of the moisture-proof resin layer (E), so that a linear low-density polyethylene layer having an average thickness of 30 µm was laminated as the moisture-proof resin layer (F). The results are shown in Table 2.

Note that Table 1 shows: the type and the basis weight of the paper layer (A); the type and the average thickness of the material constituting the vapor-deposited inorganic layer (B); the type and the ethylene unit content of the resin constituting the barrier resin layer (C), and the metal species and the content of the multivalent metal ion constituting the barrier resin layer (C); the type and the density of the resin constituting the moisture-proof resin layer (E); and the type and the density of the resin constituting the moisture-proof resin layer (F), in each multilayer structure. Furthermore, Table 2 shows: the layer configuration and the average thickness of each layer; the stretch ratio (MD × TD) of the co-extruded film; the paper layer ratio (mass ratio of the paper layer to the entire multilayer structure); and the PE ratio other than the paper layer (ratio of the total of the average thicknesses of layers each containing a polyethylene resin as a principal component, in a portion of the multilayer structure other than the paper layer), in each multilayer structure; in addition to the evaluation results.

**Table 1**

| | Paper layer (A) | | Vapor-deposited inorganic layer (B) | | Barrier resin layer (C) | | | | Moisture-proof resin layer (E) | | Moisture-proof resin layer (F) | |
|---|---|---|---|---|---|---|---|---|---|---|---|---|
| | type | basis weight | type | average thickness | type | ethylene unit content | multivalent metal ion | | type | density | type | density |
| | | | | | | | metal species | content | | | | |
| | - | g/m² | - | nm | - | mol% | - | ppm | - | g/cm³ | - | g/cm³ |
| Example 1 | paper board | 250 | Al | 50 | c-1 | 32 | Mg | 50 | LDPE | 0.926 | - | - |
| Example 2 | paper board | 250 | Al | 50 | c-2 | 27 | Mg | 50 | LDPE | 0.926 | - | - |
| Example 3 | paper board | 250 | Al | 50 | c-3 | 44 | Mg | 50 | LDPE | 0.926 | - | - |
| Example 4 | paper board | 250 | Al | 50 | c-2/3 | *27*/*44* | Mg | 50 | LDPE | 0.926 | - | - |
| Example 5 | paper board | 250 | Al | 100 | c-1 | 32 | Mg | 50 | LDPE | 0.926 | - | - |
| Example 6 | paper board | 250 | AlOx | 50 | c-1 | 32 | Mg | 50 | LDPE | 0.926 | - | - |
| Example 7 | paper board | 250 | SiOx | 50 | c-1 | 32 | Mg | 50 | LDPE | 0.926 | - | - |
| Example 8 | paper board | 250 | Al | 50 | c-1 | 32 | - | - | LDPE | 0.926 | - | - |
| Example 9 | paper board | 250 | Al | 50 | c-1 | 32 | Mg | 100 | LDPE | 0.926 | - | - |
| Example 10 | paper board | 250 | Al | 50 | c-1 | 32 | Mg | 250 | LDPE | 0.926 | - | - |
| Example 11 | paper board | 250 | Al | 50 | c-1 | 32 | Ca | 50 | LDPE | 0.926 | - | - |
| Example 12 | paper board | 250 | Al | 50 | c-1 | 32 | Zn | 50 | LDPE | 0.926 | - | - |
| Example 13 | paper board | 250 | Al | 50 | c-1 | 32 | Mg | 50 | mLLDPE | 0.915 | - | - |
| Example 14 | paper board | 250 | Al | 50 | c-1 | 32 | Mg | 50 | HDPE | 0.960 | - | - |
| Example 15 | paper board | 250 | Al | 50 | c-1 | 32 | Mg | 50 | LDPE | 0.926 | - | - |
| Example 16 | paper board | 250 | Al | 50 | c-1 | 32 | Mg | 50 | LDPE | 0.926 | - | - |
| Example 17 | paper board | 250 | Al | 50 | c-1 | 32 | Mg | 50 | LDPE | 0.926 | - | - |
| Example 18 | paper board | 250 | Al | 50 | c-1 | 32 | Mg | 50 | LDPE | 0.926 | LLDPE | 0.898 |
| Example 19 | paper board | 250 | Al | 50 | c-1 | 32 | Mg | 50 | LDPE | 0.926 | - | - |
| Example 20 | paper board | 250 | Al | 50 | c-4 | 44 | Mg | 50 | LDPE | 0.926 | - | - |
| Example 21 | paper board | 250 | Al | 50 | c-4 | 44 | Mg | 50 | LDPE | 0.926 | LLDPE | 0.898 |
| Example 22 | paper | 50 | Al | 50 | c-1 | 32 | Mg | 50 | LDPE | 0.926 | - | - |
| Example 23 | paper | 80 | Al | 50 | c-1 | 32 | Mg | 50 | LDPE | 0.926 | - | - |
| Example 24 | paper | 150 | Al | 50 | c-1 | 32 | Mg | 50 | LDPE | 0.926 | - | - |
| Example 25 | paper board | 250 | Al | 50 | c-1 | 32 | Mg | 50 | LDPE | 0.926 | LLDPE | 0.898 |
| Comparative Example 1 | paper board | 250 | Al | 50 | - | - | - | - | LDPE | 0.926 | - | - |
| Comparative Example 2 | paper board | 250 | - | - | - | - | - | - | LDPE | 0.926 | - | - |
| Comparative Example 3 | paper board | 250 | - | - | c-1 | 32 | Mg | 50 | LDPE | 0.926 | - | - |
| Comparative Example 4 | paper board | 250 | Al | 50 | PET | - | - | - | - | - | LLDPE | 0.898 |
| Comparative Example 5 | paper board | 250 | Al | 50 | c-1 | 32 | Mg | 50 | PP | 0.90 | - | - |
| Comparative Example 6 | paper board | 250 | Al | 50 | c-1 | 32 | Mg | 50 | PP | 0.90 | LLDPE | 0.898 |

**Table 2**

| | Constitutive structure of multilayer structure | | | | Evaluation results of multilayer structure | | | | | | |
|---|---|---|---|---|---|---|---|---|---|---|---|
| | layer configuration and average thickness | stretch ratio MD × TD of co-extruded film | paper layer ratio (mass) | PE ratio other than paper layer (thickness) | OTR | OTR after folding | drop strength (low temperature) | paper detectability | PE detectability | recyclability | |
| | | | | | | | | | | coloring | defects |
| | µm | - | - | - | - | - | - | - | - | | - |
| Example 1 | paper/ PE 20/ Al (50 nm)/ 4/ Tie 4/ PE 32 | unstretched | 0.82 | 0.93 | B | B | B | OK | OK | C | B |
| Example 2 | paper/ PE 20/ Al (50 nm)/ EVOH 4/ Tie 4/ PE 32 | unstretched | 0.82 | 0.93 | A | A | C | OK | OK | D | C |
| Example 3 | paper/ PE 20/ Al (50 nm)/ EVOH 4/ Tie 4/ PE 32 | unstretched | 0.82 | 0.93 | B | C | B | OK | OK | C | A |
| Example 4 | paper/ PE 20/ Al (50 nm)/ EVOH 4/ Tie 4/ PE 32 | unstretched | 0.82 | 0.93 | A | A | B | OK | OK | D | C |
| Example 5 | paper/ PE 20/ Al (100 nmy EVOH 4/ Tie 4/ PE 32 | unstretched | 0.82 | 0.93 | A | A | B | OK | OK | E | B |
| Example 6 | paper/ PE 20/ AlOx (50 nm)/ EVOH 4/ Tie 4/ PE 32 | unstretched | 0.82 | 0.93 | B | C | B | OK | OK | B | B |
| Example 7 | paper/ PE 20/ SiOx (50 nm)/ EVOH 4/ Tie 4/ PE 32 | unstretched | 0.82 | 0.93 | B | C | B | OK | OK | B | B |
| Example 8 | paper/ PE 20/ Al (50 nm)/ EVOH 4/ Tie 4/ PE 32 | unstretched | 0.82 | 0.93 | B | B | B | OK | OK | C | D |
| Example 9 | paper/ PE 20/ Al (50 nm)/ EVOH 4/ Tie 4/ PE 32 | unstretched | 0.82 | 0.93 | B | B | B | OK | OK | D | A |
| Example 10 | paper/ PE 20/ Al (50 nm)/ EVOH 4/ Tie 4/ PE 32 | unstretched | 0.82 | 0.93 | B | B | B | OK | OK | E | C |
| Example 11 | paper/ PE 20/ Al (50 nm)/ EVOH 4/ Tie 4/ PE 32 | unstretched | 0.82 | 0.93 | B | B | B | OK | OK | C | C |
| Example 12 | paper/ PE 20/ Al (50 nm)/ EVOH 4/ Tie 4/ PE 32 | unstretched | 0.82 | 0.93 | B | B | B | OK | OK | C | C |
| Example 13 | paper/ PE 20/ Al (50 nm)/ EVOH 4/ Tie 4/ PE 32 | unstretched | 0.82 | 0.93 | B | B | A | OK | OK | C | B |
| Example 14 | paper/ PE 20/ Al (50 nm)/ EVOH 4/ Tie 4/ PE 32 | unstretched | 0.82 | 0.93 | B | B | C | OK | OK | C | B |
| Example 15 | paper/ PE 20/ Al (50 nm)/ EVOH 12/ Tie 4/ PE 32 | unstretched | 0.79 | 0.82 | A | A | C | OK | OK | D | C |
| Example 16 | paper/ PE 20/ Al (50 nm)/ EVOH 4/ Tie 4/ PE 52 | unstretched | 0.77 | 0.95 | B | B | A | OK | OK | B | B |
| Example 17 | paper/ Ad 4/ Al (50 nm)/ EVOH 4/ Tie 4/ PE 32 | unstretched | 0.86 | 0.91 | B | B | C | OK | OK | D | C |
| Example 18 | PE 30/ paper/ PE 20/ Al (50 nm)/ EVOH 4/ Tie 4/ PE 32 | unstretched | 0.75 | 0.96 | B | B | A | NG | OK | B | B |
| Example 19 | paper/ PE 20/ Al (50 nm)/ EVOH 1/ Tie 1/ PE 23 | 5 × 1 | 0.86 | 0.98 | A | B | C | OK | OK | C | B |
| Example 20 | paper/ PE 20/ Al (50 nm)/ EVOH 1/ Tie 1/ PE 23 | 4 × 8 | 0.86 | 0.98 | A | B | C | OK | OK | C | *A* |
| Example 21 | paper/ PE 20/ Al (50 nm)/ EVOH 1/ Tie 1/ PE 23/ PE 30 | 4 × 8 | 0.78 | 0.99 | A | B | A | OK | OK | C | A |
| Example 22 | paper/ PE 20/ Al (50 nm)/ EVOH 4/ Tie 4/ PE 32 | unstretched | 0.47 | 0.93 | B | B | D | OK | OK | C | B |
| Example 23 | paper/ PE 20/ Al (50 nm)/ EVOH 4/ Tie 4/ PE 32 | unstretched | 0.59 | 0.93 | B | B | D | OK | OK | C | B |
| Example 24 | paper/ PE 20/ Al (50 nm)/ EVOH 4/ Tie 4/ PE 32 | unstretched | 0.73 | 0.93 | B | B | C | OK | OK | C | B |
| Example 25 | paper/ PE 20/ PE 23/ Tie 1/ EVOH 1/ Al (50 nm)/ PE 30 | 4 × 8 | 0.82 | 0.93 | B | B | C | OK | OK | C | B |
| Comparative Example 1 | paper/ PE 20/ Al (50 nm)/ PE 40 | unstretched | 0.82 | 1.00 | E | E | A | OK | OK | C | A |
| Comparative Example 2 | paper/ PE 20/ PE 40 | unstretched | 0.82 | 1.00 | E | E | A | OK | OK | A | A |
| Comparative Example 3 | paper/ PE 20/ EVOH 4/ Tie 4/ PE 32 | unstretched | 0.82 | 0.93 | E | D | B | OK | OK | B | B |
| Comparative Example 4 | paper/ PE 20/ Al (50 nm)/ PET 12/ PE 30 | unstretched | 0.81 | 0.81 | D | D | C | OK | OK | C | E |
| Comparative Example 5 | paper/ PP 20/ Al (50 nm)/ EVOH 4/ Tie 4/ PP 32 | unstretched | 0.82 | 0.00 | B | B | E | OK | NG | C | D |
| Comparative Example 6 | paper/ PP 20/ Al (50 nm)/ EVOH 4/ Tie 4/ PP 32/ PE 30 | unstretched | 0.75 | 0.33 | B | B | E | OK | OK | C | D |

As shown in Table 2, it was confirmed that the multilayer structures of Examples 1 to 25 each: enabled forming a paper container having superior gas barrier properties in both a state before folding processing and a state after the folding processing, and also having sufficient strength even in low-temperature environments; and inhibited the occurrence of defects during recycling.

### [INDUSTRIAL APPLICABILITY]

The multilayer structure of the present invention can be suitably used as a material for forming paper containers such as a paper container for liquid.

## Claims

1. A multilayer structure comprising:
a paper layer (A);
a vapor-deposited inorganic layer (B);
a barrier resin layer (C);
an adhesion resin layer (D); and
a moisture-proof resin layer (E), wherein
the vapor-deposited inorganic layer (B), the barrier resin layer (C), the adhesion resin layer (D), and the moisture-proof resin layer (E) are all directly laminated in this order,
the vapor-deposited inorganic layer (B) has an average thickness of 5 nm or more and 200 nm or less,
the barrier resin layer (C) comprises, as a principal component, an ethylene-vinyl alcohol copolymer (c) having an ethylene unit content of 20 mol% or more and 50 mol% or less, and a degree of saponification of 90 mol% or more,
the adhesion resin layer (D) comprises an adhesive resin (d) as a principal component,
the moisture-proof resin layer (E) comprises a polyethylene (e) as a principal component, and
the multilayer structure does not comprise: a layer comprising, as a principal component, a resin having a melting point of 200 °C or higher; and a metal layer having an average thickness of 1 µm or more.

2. The multilayer structure according to claim 1, further comprising a thermoplastic-resin layer (X) interposed between the paper layer (A) and the vapor-deposited inorganic layer (B) or the moisture-proof resin layer (E).

3. The multilayer structure according to claim 1 or 2, comprising the paper layer (A), the vapor-deposited inorganic layer (B), the barrier resin layer (C), the adhesion resin layer (D), and the moisture-proof resin layer (E) in this order.

4. The multilayer structure according to any one of claims 1 to 3, wherein the adhesive resin (d) is an acid-modified polyethylene.

5. The multilayer structure according to any one of claims 1 to 4, wherein the vapor-deposited inorganic layer (B) is: a vapor-deposited metal layer comprising aluminum as a principal component; or a vapor-deposited inorganic-oxide layer comprising alumina or silica as a principal component.

6. The multilayer structure according to any one of claims 1 to 5, wherein the barrier resin layer (C) comprises at least one type of multivalent metal ion selected from the group consisting of a magnesium ion, a calcium ion, and a zinc ion, in an amount of 10 ppm or more and 200 ppm or less.

7. The multilayer structure according to any one of claims 1 to 6, wherein the ethylene-vinyl alcohol copolymer (c) comprises two or more types of ethylene-vinyl alcohol copolymers having different ethylene unit contents.

8. The multilayer structure according to any one of claims 1 to 7, wherein the polyethylene (e) has a density of 0.880 g/cm³ or more and 0.940 g/cm³ or less, and
the polyethylene (e) is a linear low-density polyethylene, a low-density polyethylene, or a mixture thereof.

9. The multilayer structure according to any one of claims 1 to 8, wherein
a laminate of the barrier resin layer (C), the adhesion resin layer (D), and the moisture-proof resin layer (E) is a co-extruded film,
the co-extruded film has an average thickness of 8 µm or more and 120 µm or less, and
the vapor-deposited inorganic layer (B) is provided on a face of the co-extruded film on a barrier resin layer (C) side.

10. The multilayer structure according to claim 9, wherein
the barrier resin layer (C) has an average thickness of 0.2 µm or more and less than 30 µm, and
layer (C) in the average thickness of the co-extruded film is less than 25%.

11. The multilayer structure according to claim 9 or 10, wherein the co-extruded film is substantially not stretched.

12. The multilayer structure according to claim 9 or 10, wherein the co-extruded film is at least uniaxially stretched by three times or more and less than twelve times.

13. The multilayer structure according to claim 9 or 10, wherein the co-extruded film is biaxially stretched each by three times or more and less than twelve times.

14. The multilayer structure according to any one of claims 9 to 13, further comprising a moisture-proof resin layer (F) comprising a polyethylene (f) as a principal component.

15. The multilayer structure according to claim 14, wherein
the polyethylene (f) has a density of 0.880 g/cm³ or more and 0.940 g/cm³ or less, and
the polyethylene (f) is a linear low-density polyethylene, a low-density polyethylene, or a mixture thereof.

16. The multilayer structure according to claim 14 or 15, wherein the moisture-proof resin layer (F) is directly laminated to the co-extruded film.

17. The multilayer structure according to any one of claims 1 to 16, not comprising an adhesive-agent layer made from a curable adhesive agent.

18. The multilayer structure according to any one of claims 1 to 17, wherein the paper layer (A) has a basis weight of 200 g/m² or more and less than 400 g/m².

19. The multilayer structure according to any one of claims 1 to 18, wherein a mass ratio of the paper layer (A) to the entire multilayer structure is 0.60 or more.

20. The multilayer structure according to any one of claims 1 to 19, wherein in a portion of the multilayer structure other than the paper layer (A), a ratio of a total of average thicknesses of layers each comprising a polyethylene resin as a principal component is 0.75 or more.

21. The multilayer structure according to any one of claims 1 to 20, wherein in a portion of the multilayer structure other than the paper layer (A), a ratio of a total of average thicknesses of layers each comprising, as a principal component, a resin comprising an ethylene unit is 0.95 or more.

22. The multilayer structure according to any one of claims 1 to 21, comprising the paper layer (A) as a surface of the multilayer structure.

23. The multilayer structure according to any one of claims 1 to 22, having an oxygen transmission rate of less than 0.5 cc/(m²·day ·atm) under a condition involving 20 °C and 65% RH, measured in accordance with a method disclosed in JIS K 7126-2:2006.

24. The multilayer structure according to any one of claims 1 to 23, wherein after the multilayer structure is subjected to folding processing that comprises: folding the multilayer structure in four such that the paper layer (A) is closer to an outside of the multilayer structure than the moisture-proof resin layer (E) is; and leaving the multilayer structure to stand in this state for one minute while applying a load of 5 kg to a top of the multilayer structure, the multilayer structure has an oxygen transmission rate of less than 1.0 cc/(m²- day·atm) under a condition involving 20 °C and 65% RH, measured in accordance with a method disclosed in JIS K 7126-2:2006.

25. A paper container for liquid, the paper container being formed from the multilayer structure according to any one of claims 1 to 24.
